# EUROPEAN PATENT APPLICATION

(11) **EP 4 819 210 A1**
(43) Date of publication of application: **07.10.2026**
(21) Application number: 26167806.4
(22) Date of filing: 25.03.2026
(51) Int. Cl.: H01M 4/04, H01M 4/34, H01M 4/54, H01M 4/62, H01M 4/525, H01M 10/04, H01M 4/02

(54) **COMPOSITION FOR COATING ANODE CURRENT COLLECTOR, METHOD OF MANUFACTURING ANODE CURRENT COLLECTOR FOR LITHIUM SECONDARY BATTERY BY USING THE SAME, ANODE CURRENT COLLECTOR FOR LITHIUM SECONDARY BATTERY AND LITHIUM SECONDARY BATTERY**

(30) Priority: 01.04.2025 KR 20250042440
(71) Applicant: SK On Co., Ltd., Seoul 03161 (KR); Industry-University Cooperation Foundation Hanyang University, Seoul 04763 (KR)
(72) Inventor: CHO, Yun Sun, 34124 Daejeon (KR); KIM, Dong Won, 06219 Seoul (KR); SIM, Hui Tae, 02622 Seoul (KR); OH, Myung Keun, 04764 Seoul (KR); PARK, Ye Eun, 34124 Daejeon (KR); KIM, Hyo Jin, 05652 Seoul (KR); KIM, Chae Young, 04761 Seoul (KR)
(74) Representative: Prüfer & Partner mbB Patentanwälte · Rechtsanwälte

(57) **Abstract**

A composition for coating an anode current collector according to exemplary embodiments of the present disclosure includes a silver salt and a water-soluble binder.

## Description

### [BACKGROUND OF THE INVENTION]

### 1. Field of the Invention

The present disclosure relates to a composition for coating an anode current collector, a method of manufacturing an anode current collector for a lithium secondary battery using the composition, an anode current collector for a lithium secondary battery, and a lithium secondary battery.

### 2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as electric vehicles and hybrid vehicles.

Examples of secondary batteries may include a lithium secondary battery, a nickelcadmium battery, and a nickel-hydrogen battery. Among these, the lithium secondary battery has been actively studied due to its high operating voltage, high energy density per unit weight, and advantages in charging speed and weight reduction.

Since commercially available lithium secondary batteries mainly use liquid electrolytes, there are safety issues such as leakage, ignition, and explosion caused by sudden environmental changes, including temperature fluctuations, external impacts, and the like. To address these problems, attempts to solidify the electrolyte in order to secure stability and improve energy density have been ongoing.

All-solid-state batteries may include a solid-state electrolyte such as a gel polymer, an oxide, a sulfide, or a composite polymer. Accordingly, stability against ignition and explosion due to external impacts or external environmental changes may be enhanced.

### [SUMMARY OF THE INVENTION]

An object of the present disclosure is to provide a composition for coating an anode current collector that enables an anode to be coated through a simple process.

Another object of the present disclosure is to provide a method of manufacturing an anode current collector for a lithium secondary battery using the composition for coating an anode current collector.

Yet another object of the present disclosure is to provide an anode current collector for a lithium secondary battery manufactured using the composition and a lithium secondary battery including the anode current collector.

A composition for coating an anode current collector according to exemplary embodiments of the present disclosure includes: a silver (Ag) salt; and a water-soluble binder.

In exemplary embodiments, the silver salt may include at least one selected from the group consisting of silver bis(trifluoromethanesulfonyl) imide (AgTFSI), silver bis(fluorosulfonyl) imide (AgFSI), silver nitrate (AgNO₃), silver difluorooxalatoborate (AgDFOB), silver bisoxalateborate (AgBOB), silver hexafluorophosphate (AgPF₆), silver tetrafluoroborate (AgBF₄), and silver perchlorate (AgClO₄).

In exemplary embodiments, the water-soluble binder may include at least one selected from the group consisting of polyacrylic acid (PAA), polyethylene maleic anhydride (PEMA), cellulose, carboxymethyl cellulose (CMC), hydroxypropyl cellulose (HPC), and polyethylene oxide (PEO).

In exemplary embodiments, the silver salt and the water-soluble binder may be present in a weight ratio of 2:8 to 8:2.

In exemplary embodiments, the composition for coating an anode current collector may further include a solvent, wherein the solvent may be water.

In exemplary embodiments, an acidity (pH) of the composition for coating an anode current collector may be 5.5 or less.

In a method of manufacturing an anode current collector for a lithium secondary battery according to exemplary embodiments of the present disclosure, a coating composition is prepared by adding a silver salt and a water-soluble binder to a solvent. The coating composition is applied onto an anode current collector. The applied coating composition is dried.

In exemplary embodiments, the coating composition may be heated before applying the coating composition onto the anode current collector.

In exemplary embodiments, a temperature of the coating composition may be maintained at 40 °C to 60 °C.

In exemplary embodiments, the drying step may be performed at 80 °C to 100 °C.

In exemplary embodiments, the drying step may be a vacuum drying step.

An anode current collector for a lithium secondary battery according to exemplary embodiments of the present disclosure may include: a metal layer including a metal having an ionization tendency higher than that of silver (Ag); and a coating layer including silver particles formed by reduction of metal elements on a surface of the metal layer, a water-soluble binder, and a coordination compound of silver cations and the water-soluble binder.

A lithium secondary battery according to exemplary embodiments of the present disclosure may include a cathode; and the above-described anode current collector disposed opposite the cathode.

In exemplary embodiments, the lithium secondary battery may further include a solid electrolyte layer interposed between the cathode and the anode current collector.

In exemplary embodiments, the lithium secondary battery may be an anode-free secondary battery.

The composition for coating an anode current collector according to exemplary embodiments of the present disclosure includes a silver salt and a water-soluble binder, and an anode for a lithium secondary battery may be manufactured by coating a current collector using the coating composition through a simple manufacturing process.

The anode current collector for a lithium secondary battery manufactured according to exemplary embodiments of the present disclosure may stabilize an interface between a solid electrolyte and the anode during charge and discharge cycles.

The lithium secondary battery manufactured according to exemplary embodiments of the present disclosure may exhibit improved cycle life and cycle performance.

The lithium secondary battery including an anode current collector of the present disclosure may be widely applied in green technology fields, including electric vehicles, battery charging stations, and green technology fields including renewable energy systems using batteries, such as solar power generation and wind power generation. In addition, the lithium secondary battery including the anode current collector of the present disclosure may be used in eco-friendly electric vehicles and hybrid vehicles to suppress emission of air pollutants and greenhouse gases, thereby contributing to mitigation of climate change.

### [BRIEF DESCRIPTION OF THE DRAWINGS]

The above and other objects, features and advantages of the present disclosure will be more clearly understood from the following detailed description taken in conjunction with the accompanying drawings, in which:
FIG. 1 is a schematic cross-sectional view illustrating an anode current collector for a lithium secondary battery according to exemplary embodiments;
FIG. 2 is a flowchart illustrating a method of manufacturing an anode current collector using a coating composition according to exemplary embodiments;
FIG. 3 is a schematic cross-sectional view illustrating a lithium secondary battery according to exemplary embodiments;
FIG. 4 is a graph illustrating indentation depth versus load obtained by nanoindenter analysis of surfaces of anode current collectors of Examples 1 and 2 and Comparative Example 1;
FIGS. 5A to 10C are SEM and EDX images of surfaces of the anode current collectors of Examples 1 to 4 and Comparative Examples 1 and 2, respectively;
FIG. 11 is an SEM image of a surface of the anode current collector of Example 5;
FIGS. 12 to 17 are TEM, SEM, and EDS images of the anode current collector of Example 1;
FIG. 18 is an XRD graph analyzing crystal structure components of the anode current collectors of Example 1 and Comparative Example 2;
FIG. 19 is an XRD graph analyzing crystal structure components of the anode current collectors of Example 2 and Comparative Example 2;
FIG. 20 is an XRD graph analyzing crystal structure components of the anode current collectors of Comparative Examples 1 and 2;
FIGS. 21A to 23C are XPS graphs analyzing crystal structure components of the anode current collectors of Examples 1 and 2 and Comparative Example 2, respectively;
FIGS. 24 to 26 are charge and discharge graphs of the secondary batteries of Examples 1 and 2 and Comparative Example 2, respectively;
FIGS. 27 and 28 are cycle life characteristic graphs of the secondary batteries of Examples 1 and 2, respectively;
FIG. 29 is a discharge graph according to a rate change of the secondary battery of Example 1;
FIGS. 30 and 31 are SEM images of the secondary battery of Example 1 taken after charging at a current density of 0.3 mA/cm² for 1 hour;
FIGS. 32 and 33 are SEM images of the secondary battery of Example 1 taken after charging at a current density of 0.3 mA/cm² for 3 hours;
FIGS. 34 and 35 are SEM images of the secondary battery of Example 1 taken after charging at a current density of 0.3 mA/cm² for 10 hours;
FIGS. 36 to 38 are SEM and EDS images taken after initial charging of the secondary battery of Example 1;
FIGS. 39 to 41 are SEM and EDS images taken after initial discharging of the secondary battery of Example 1;
FIGS. 42 to 44 are SEM and EDS images taken after charging the secondary battery of Example 1 under a 0.33C condition;
FIGS. 45 to 47 are SEM and EDS images taken after discharging the secondary battery of Example 1 under a 0.33C condition;
FIG. 48 is a graph illustrating results of LSV testing on the symmetric cells of Example 1 and Comparative Example 2;
FIGS. 49 to 51 are graphs illustrating impedance changes over time for the symmetric cells of Examples 1 and 2 and Comparative Example 2, respectively;
FIGS. 52 to 56 are SEM and EDS images of a surface of the anode current collector of the symmetric cell of Example 1 after 3 days;
FIGS. 57 to 61 are SEM and EDS images of a surface of the anode current collector of the symmetric cell of Comparative Example 2 after 3 days;
FIG. 62 is a graph illustrating Coulombic efficiency versus cycle number for the lithium-copper cells of Examples 1 and 2 and Comparative Example 2;
FIG. 63 is a voltage versus time graph illustrating lithium deposition during a first cycle after initial charging for the lithium-copper cells of Examples 1 and 2 and Comparative Example 2;
FIGS. 64 to 66 are capacity-voltage graphs of anodes of the lithium-copper cells of Examples 1 and 2 and Comparative Example 2, respectively;
FIG. 67 is an SEM image of an interface of an anode current collector taken after charge and discharge evaluation of the lithium-copper cell of Example 1;
FIG. 68 is an SEM image of an interface of an anode current collector taken after charge and discharge evaluation of the lithium-copper cell of Comparative Example 2;
FIG. 69 is an SEM image of an electrolyte surface shown in FIG. 68; and
FIGS. 70 and 71 are SEM and EDS images of an enlarged region indicated by a dotted square in FIG. 69.

### [DETAILED DESCRIPTION OF THE INVENTION]

The present disclosure provides a composition for coating an anode current collector according to exemplary embodiments (hereinafter, also abbreviated as a "coating composition"), an anode current collector for a lithium secondary battery (hereinafter, also abbreviated as an "anode current collector") using the coating composition, and a method of manufacturing a lithium secondary battery (hereinafter, also abbreviated as a "secondary battery").

Hereinafter, embodiments of the present disclosure will be described in detail. However, the embodiments are merely illustrative, and the present disclosure is not limited to the specific embodiments described as examples.

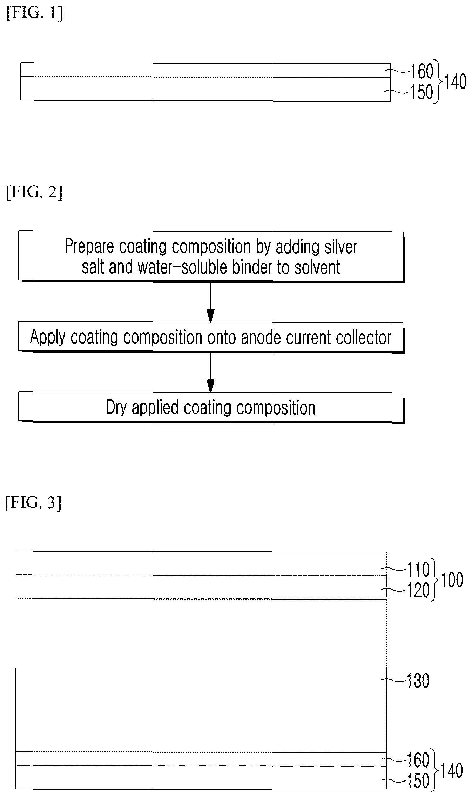

FIG. 1 is a schematic cross-sectional view illustrating an anode current collector for a lithium secondary battery according to exemplary embodiments.

Referring to FIG. 1, an anode current collector 140 may include a metal layer 150 and a coating layer 160.

In exemplary embodiments, the metal layer 150 may include a metal having an ionization tendency higher than that of silver (Ag).

In exemplary embodiments, the metal layer 150 may include a copper foil, a nickel foil, a stainless steel foil, a titanium foil, a nickel foam, a copper foam, a polymer substrate coated with a conductive metal, or the like.

In exemplary embodiments, the metal layer 150 may have a thickness of 10 µm to 50 µm, 10 µm to 30 µm, or 10 µm to 20 µm.

In exemplary embodiments, the coating layer 160 may include silver particles formed by reduction of metal elements on a surface of the metal layer 150, a water-soluble binder, and a coordination compound of silver cations (Ag⁺) and the water-soluble binder. For example, the coordination compound may be a compound in which silver cations (Ag⁺) and the water-soluble binder are coordination-bonded, and protons (H⁺) may be dissociated from the water-soluble binder during the coordination bonding.

In exemplary embodiments, the coating layer 160 may have a thickness of 0.01 µm to 50 µm, 0.03 µm to 30 µm, 0.05 µm to 15 µm, 0.07 µm to 10 µm, or 0.1 µm to 3 µm.

In exemplary embodiments, the coating layer 160 may be formed on one surface of the metal layer. For example, the anode current collector 140 including the coating layer 160 may be manufactured by the coating composition.

The coating composition according to exemplary embodiments of the present disclosure may include a silver salt and a water-soluble binder.

For example, silver (Ag) is a lithiophilic metal having high stability, and, when used as a material for forming the coating layer 160, may suppress growth of lithium dendrites, thereby improving charge-discharge efficiency of a secondary battery. In addition, when a silver salt (Ag⁺), rather than silver particles, is used as the material for forming the coating layer 160, a uniform anode coating may be achieved.

The silver (Ag) salt may include silver cations (Ag⁺).

In exemplary embodiments, the silver (Ag) salt may be a salt in which silver cations (Ag⁺) are bound to an arbitrary anion (X⁻). For example, the silver salt may have a formula of AgX.

In some embodiments, the anion (X⁻) may be bound to a water molecule (H₂O) to provide a proton (H⁺).

Examples of the silver (Ag) salt may include silver bis(trifluoromethanesulfonyl) imide (AgTFSI), silver bis(fluorosulfonyl) imide (AgFSI), silver nitrate (AgNO₃), silver difluorooxalatoborate (AgDFOB), silver bisoxalateborate (AgBOB), silver hexafluorophosphate (AgPF₆), silver tetrafluoroborate (AgBF₄), and silver perchlorate (AgClO₄), but are not limited thereto. In one embodiment, silver nitrate (AgNO₃) may be used as the silver salt.

The arbitrary anion (X⁻) may include a nitrogen element and/or a fluorine element, and more specifically, may include a nitrogen element.

Specifically, the silver salt may include one or more selected from the group consisting of silver bis(trifluoromethanesulfonyl) imide (AgTFSI), silver bis(fluorosulfonyl) imide (AgFSI), silver nitrate (AgNO₃), silver difluorooxalatoborate (AgDFOB), silver hexafluorophosphate (AgPF₆), and silver tetrafluoroborate (AgBF₄). More specifically, the silver salt may include silver nitrate (AgNO₃).

In exemplary embodiments, the metal layer 150 of the anode current collector 140 may include a metal having an ionization tendency higher than that of silver (Ag). For example, the metal layer 150 may include copper (Cu).

The silver ions (Ag⁺) contained in the above-described silver salt may be reduced to silver particles through a metal displacement reaction with a metal element (e.g., a copper (Cu) element) on the surface of the metal layer 150, thereby coating the metal layer 150 with silver (Ag).

In exemplary embodiments, the reduced silver particles may have a median particle diameter (D₅₀) of 1 nm to 50 nm, 5 nm to 30 nm, 10 nm to 20 nm, or 12 nm to 18 nm.

The term "median particle diameter (D₅₀)" as used herein may refer to the longest particle diameter at which the cumulative volume fraction reaches 50% in a volume-based particle size distribution.

Accordingly, cycle life and cycle characteristics of a secondary battery using the coated anode current collector may be improved.

In exemplary embodiments, the coating layer 160 may further include copper (Cu) cations. For example, the coating layer 160 may include copper cations in the form of a copper salt. For example, the content of copper (Cu) cations included in the coating layer may be 0.1% by weight ("wt%") or less, 0.01 wt% or less, or 0.001 wt% or less based on the total weight of the coating layer 160. For example, by removing the coating composition with a tissue or the like before drying after the metal displacement reaction, the content of copper cations formed by the metal displacement reaction may be low within the coating layer 160.

The water-soluble binder may be a binder that binds solid particles while being dissolved or dispersed in water. When the coating composition includes a water-soluble binder, water may be used as a solvent, thereby facilitating coating of the anode current collector. In addition, the coating layer may be rapidly cured by evaporating water during drying after applying the composition.

The water-soluble binder may be capable of donating a proton through coordination bonding with a silver cation (Ag⁺) included in the coating composition. For example, the water-soluble binder may be in a form in which a proton is associated with a conjugate base of the water-soluble binder.

Examples of the water-soluble binder may include polyacrylic acid (PAA), polyethylene maleic anhydride (PEMA), cellulose, carboxymethyl cellulose (CMC), hydroxypropyl cellulose (HPC), polyvinylidene fluoride-hexafluoropropylene (PVdF-HFP), and polyethylene oxide (PEO), but are not limited thereto.

More specifically, the water-soluble binder may include one or more functional groups selected from the group consisting of a hydroxyl group, a carboxyl group, and an anhydride group. The anhydride group may be a cyclic anhydride group.

In one embodiment, the water-soluble binder may include polyacrylic acid (PAA), polyethylene maleic anhydride (PEMA), cellulose, carboxymethyl cellulose (CMC), hydroxypropyl cellulose (HPC), or a combination thereof. More specifically, polyethylene maleic anhydride (PEMA) may be used as the water-soluble binder.

The water-soluble binder may uniformly induce a metal displacement reaction between silver cations (Ag⁺) contained in the silver salt and the metal layer 150 of the anode current collector 140, and may facilitate adhesion of silver particles to the metal layer 150. Accordingly, a secondary battery using an anode coated with the coating composition of the present disclosure may exhibit improved cycle life and cycle characteristics.

In exemplary embodiments, an acidity (pH) of the coating composition may be controlled by adjusting a type and/or content of the silver salt and/or the water-soluble binder. When the water-soluble binder included in the coating composition forms a coordination bond with silver cations (Ag⁺), protons (H⁺) from the water-soluble binder may be substituted with silver cations (Ag⁺). In this case, as the number of silver cations (Ag⁺) included in the coating composition decreases, the number of protons (H⁺) dissociated from the water-soluble binder increases, thereby decreasing the acidity of the coating composition, so that the coating layer 160 may be uniformly formed on the metal layer 150.

For example, the acidity of the coating composition may be 1 or more, 1.2 or more, 1.5 or more, or 2 or more.

For example, the acidity of the coating composition may be 5.5 or less, 5.0 or less, 4.8 or less, 4.5 or less, 4 or less, 3.5 or less, 3 or less, 2.7 or less, or 2.5 or less. Within this range, silver particles may be uniformly coated on the metal layer 150.

In exemplary embodiments, the coating composition may further include a solvent. For example, the solvent may be water.

In exemplary embodiments, the coating composition may include the silver salt and the water-soluble binder in a weight ratio of 2:8 to 8:2, 3:7 to 7:3, or 4:6 to 6:4.

The coating composition of the present disclosure includes a silver salt rather than silver particles, thereby enabling manufacture of an anode and a secondary battery including the same through a simple manufacturing method, without additional manufacturing processes that are costly and complex, such as atomic layer deposition (ALD) and chemical vapor deposition (CVD), during manufacture of the anode.

In addition, by further including a water-soluble binder, elastic properties may be imparted to the anode. Accordingly, volume expansion of the anode may be mitigated, and the cycle life of the secondary battery may be extended.

In exemplary embodiments, an elastic recovery ratio of the anode represented by Equation 1 below may be 7% to 20%, 8% to 18%, 9% to 15%, or 9.5% to 13%. [Equation 1] $Elastic recovery ratio = \left(Maximum depth-Depth at zero load\right) / Maximum depth$

In Equation 1, the maximum depth is a depth to which a nanoindenter tip penetrates into the anode when a load applied to the anode through the nanoindenter tip reaches 10 mN, and the depth at zero load is a depth to which the nanoindenter tip remains penetrated when the load applied to the nanoindenter tip is reduced from 10 mN to zero.

Hereinafter, a method of manufacturing an anode current collector using the above-described coating composition will be described in detail with reference to the accompanying drawings. However, this description is merely exemplary, and the present disclosure is not limited to the specific embodiments described by way of example.

FIG. 2 is a flowchart illustrating the method of manufacturing an anode current collector using the coating composition according to exemplary embodiments.

Referring to FIG. 2, the silver salt and the water-soluble binder are introduced into a solvent to prepare a coating composition. For example, the coating composition may be as described above.

In one embodiment, the coating composition may be maintained at a temperature of 40 °C to 60 °C or 45°C to 55°C. For example, by heating the coating composition to maintain the temperature within the above-described range, a binding strength between the silver salt and the water-soluble binder may be increased. In this case, the number of free silver ions within the coating composition may be reduced, thereby decreasing a diffusion rate. Accordingly, when the coating composition is applied onto a current collector, silver may be uniformly coated on the anode current collector.

In exemplary embodiments, the coating composition is applied onto the metal layer 150. Thus, the coating layer 160 may be disposed on one surface of the metal layer 150.

In exemplary embodiments, the applied coating composition is dried to obtain the anode current collector 140 in which the coating layer 160 is disposed on one surface of the metal layer 150.

In one embodiment, the applied coating composition may be primarily removed using a tissue or the like before drying.

In one embodiment, the drying may be vacuum drying.

In one embodiment, the drying or vacuum drying may be performed at a temperature of 80 °C to 100 °C, or 85 °C to 95 °C.

Accordingly, residual solvents, etc., of the anode current collector may be removed.

In one embodiment, the drying may be performed for 3 to 12 hours, 4 to 10 hours, or 5 to 6 hours.

According to the method of manufacturing an anode current collector according to exemplary embodiments of the present disclosure, an anode current collector may be manufactured through a simple manufacturing process.

FIG. 3 is a schematic cross-sectional view illustrating a lithium secondary battery according to exemplary embodiments.

Referring to FIG. 3, the lithium secondary battery may include a cathode 100, the anode current collector 140 disposed opposite the cathode 100, and a solid electrolyte layer 130 disposed between the cathode and the anode current collector. For example, the anode current collector 140 may be the anode current collector described above.

The secondary battery according to exemplary embodiments may be an anode-free secondary battery having no anode active material layer. Accordingly, a secondary battery manufactured using the coating composition according to exemplary embodiments of the present disclosure may exhibit improved energy density while having reduced manufacturing costs.

In the present disclosure, the anode-free secondary battery may refer to a secondary battery that does not include an active material such as a silicon-based active material or a carbon-based active material.

In exemplary embodiments, the solid electrolyte layer 130 may be in direct contact with the anode current collector 140.

The cathode 100 may include a cathode current collector 110 and a cathode active material layer 120 disposed on at least one surface of the cathode current collector 110.

The cathode current collector 110 may include stainless steel, nickel, aluminum, titanium, or an alloy thereof. The cathode current collector 110 may also include aluminum or stainless steel having a surface treated with carbon, nickel, titanium or silver. The cathode current collector may have a thickness of, for example, 10 µm to 50 µm.

The cathode may include a cathode active material. The cathode active material may include a compound capable of reversibly intercalating and deintercalating lithium ions.

Examples of the cathode active material include one or more compounds selected from a lithium iron phosphate compound, a lithium cobalt oxide, a lithium manganese oxide, a lithium nickel oxide, or a lithium composite oxide. For example, the cathode active material may include a layered compound such as lithium cobalt oxide (LiCoO₂) or lithium nickel oxide (LiNiO₂), or a lithium manganese oxide such as LiMnO₃, LiMn₂O₃, and LiMnO₂; a lithium copper oxide (Li₂CuO₂); a vanadium oxide such as LiV₃O₈, V₂O₅, and Cu₂VO₇; or a lithium iron phosphate oxide such as LiFePO₄.

According to exemplary embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or a crystal structure represented by Formula 1 below.

[Formula 1] LiₓNiₐM_{b}O_{2+z}

In Formula 1, x, a, b and z may satisfy 0.9≤x≤1.2, 0.6≤a≤0.99, 0.01≤b≤0.4, and - 0.5≤z≤0.1. As described above, M may include Co, Mn and/or Al.

The chemical structure represented by Formula 1 indicates a bonding relationship among elements included in the layered structure or the crystal structure of the cathode active material, and does not exclude the presence of additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 1.

The auxiliary element may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act, for example, as an auxiliary active element that contributes to the capacity/output activity of the cathode active material together with Co or Mn, such as Al.

For example, the cathode active material or the lithium-nickel metal oxide may include a layered structure or a crystal structure represented by Formula 1-1 below.

[Formula 1-1] LiₓNiₐM1_{b}M2_{c}O_{2+z}

In Formula 1-1, M1 may include Co, Mn and/or Al. M2 may include the auxiliary elements described above. In Formula 1-1, x, a, b, c and z may satisfy 0.9≤x≤1.2, 0.6≤a≤0.99, 0.01≤b+c≤0.4, and -0.5≤z≤0.1.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may be present on the surface of lithium-nickel metal oxide particles, or may penetrate through the surface of the lithium-nickel metal oxide particles to be incorporated into the bonding structure represented by Formula 1 or Formula 1-1 above.

The cathode active material may include a nickel-cobalt-manganese (NCM)-based lithium oxide. In this case, an NCM-based lithium oxide having an increased content of nickel may be used.

Nickel (Ni) may serve as a transition metal associated with the output and capacity of the lithium secondary battery. Therefore, as described above, by employing a high-nickel-content (high-Ni) composition in the cathode active material, a high-capacity cathode and a high-capacity lithium secondary battery may be provided.

However, as the Ni content increases, the long-term storage stability and cycle life stability of the cathode or the secondary battery may be relatively reduced, and side reactions with the electrolyte may also increase. Nevertheless, according to exemplary embodiments, by including Co, the cycle life stability and capacity retention characteristics may be improved by Mn, while electrical conductivity is maintained.

The content of Ni (e.g., the mole fraction of nickel based on the total molar amount of nickel, cobalt and manganese) in the NCM-based lithium oxide may be 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., LiFePO₄).

In some embodiments, the cathode active material may include, for example, a manganese (Mn)-rich active material, a lithium (Li)-rich layered oxide (LLO)/over-lithiated oxide (OLO)-based active material, or a cobalt (Co)-less active material, which has a chemical structure or a crystal structure represented by Formula 2 below.

[Formula 2] p[Li₂MnO₃]·(1-p)[Li_{q}JO₂]

In Formula 2, p and q may satisfy 0<p<1, and 0.9≤q≤1.2, and J may include at least one element selected from Mn, Ni, Co, Fe, Cr, V, Cu, Zn, Ti, Al, Mg and B.

The content of the cathode active material may be about 50 wt% to 90 wt% based on the total weight of the cathode active material layer 120. According to exemplary embodiments, the content of the cathode active material may be about 60 wt% to 85 wt% based on the total weight of the cathode active material layer 120.

The cathode active material layer 120 may further include a solid electrolyte. Accordingly, a decrease in ion mobility due to the absence of an electrolyte may be compensated. For example, the solid electrolyte may include a sulfide-based solid electrolyte or an oxide-based solid electrolyte.

The content of the solid electrolyte may be about 5 wt% to 40 wt% based on the total weight of the cathode active material layer 120.

For example, a cathode slurry may be prepared by mixing a solvent and the cathode active material. The cathode slurry may be coated on the cathode current collector 110, followed by drying and roll-pressing to prepare the cathode active material layer 120. The coating process may be performed using methods such as gravure coating, slot die coating, simultaneous multilayer die coating, imprinting, doctor blade coating, dip coating, bar coating or casting, etc., but is not limited thereto. The cathode active material layer may further include a binder and optionally may further include a conductive material, a thickener or the like.

Non-limiting examples of the solvent used in the preparation of the cathode slurry may include N-methyl-2-pyrrolidone (NMP), dimethylformamide, dimethylacetamide, N,N-dimethylaminopropylamine, ethylene oxide, tetrahydrofuran or the like.

The binder may include polyvinylidene fluoride (PVDF), poly(vinylidene fluoride-co-hexafluoropropylene), polyacrylonitrile, polymethyl methacrylate, acrylonitrile butadiene rubber (NBR), poly(butadiene) rubber (BR), styrene-butadiene rubber (SBR) and the like. In one embodiment, a PVDF-based binder may be used as the cathode binder.

The conductive material may be added to the cathode active material layer to enhance the conductivity thereof and/or the mobility of lithium ions or electrons. For example, the conductive material may include carbon-based conductive materials such as graphite, carbon black, acetylene black, Ketjen black, graphene, carbon nanotubes, vapor-grown carbon fibers (VGCF), and carbon fibers; and/or metal-based conductive materials such as tin, tin oxide, and titanium oxide; as well as perovskite materials such as LaSrCoO₃, and LaSrMnO₃, but is not limited thereto.

The cathode slurry may further include a thickener and/or a dispersant, as needed. In one embodiment, the cathode slurry may include a thickener such as carboxymethyl cellulose (CMC).

In some embodiments, the solid electrolyte layer 130 including a solid electrolyte may be interposed between the cathode 100 and the anode current collector 140 within the electrode assembly. For example, an electrode cell may be defined by the cathode 100, the anode current collector 140, and the solid electrolyte layer 130, and a plurality of the electrode cells may be stacked to form the electrode assembly. For example, the electrode assembly may be formed by winding, stacking, folding, or the like.

The solid electrolyte layer 130 may include an inorganic solid electrolyte and/or an organic solid electrolyte. For example, the inorganic solid electrolyte may include an oxide-based solid electrolyte or a sulfide-based solid electrolyte, and the organic solid electrolyte may include a polymer electrolyte, or the like. For example, when the inorganic solid electrolyte includes a sulfide-based solid electrolyte, an energy density of the secondary battery may be further improved.

In an exemplary embodiment, the solid electrolyte layer 130 may include an argyrodite-type compound, which may be represented by Li₇₋ₓPS₆₋ₓClₓ (0≤x≤2), Li₇₋ₓPS₆₋ₓBrₓ (0≤x≤2), Li₇₋ₓPS₆₋ₓIₓ (0≤x≤2), or the like.

The solid electrolyte layer 130 may further include a binder together with the solid electrolyte. The solid electrolyte layer 130 may include a polymer material substantially the same as or similar to the above-described binder for forming the cathode.

For example, after preparing a solid electrolyte composition including the solid electrolyte and the binder, the solid electrolyte layer 130 may be formed through a pressure molding process using a mold.

The cathode active material layer 120 and the coating layer 160 of the anode current collector 140 may each be in contact with the solid electrolyte layer 130. For example, the cathode active material layer 120 may be in contact with one surface of the solid electrolyte layer 130, and the coating layer 160 may be in contact with the other surface of the solid electrolyte layer 130 opposite the one surface.

For example, electrode tabs (cathode tabs and anode tabs) may protrude from the cathode current collector and the anode current collector, respectively, and may extend to one side of the case. The electrode tabs may be welded together with the one side of the case and connected to electrode leads (a cathode lead and an anode lead) that extend to or are exposed outside the case.

For example, a pouch-type case, a prismatic case, a cylindrical case, or a coin-type case may be used.

The invention relates also to the following numbered aspects:
Aspect 1. A composition for coating an anode current collector comprising:
   a silver (Ag) salt; and
   a water-soluble binder.
Aspect 2. The composition for coating an anode current collector according to aspect 1, wherein the silver salt comprises at least one selected from the group consisting of silver bis(trifluoromethanesulfonyl) imide (AgTFSI), silver bis(fluorosulfonyl) imide (AgFSI), silver nitrate (AgNO₃), silver difluorooxalatoborate (AgDFOB), silver bisoxalateborate (AgBOB), silver hexafluorophosphate (AgPF₆), silver tetrafluoroborate (AgBF₄), and silver perchlorate (AgClO₄).
Aspect 3. The composition for coating an anode current collector according to aspect 1 or 2, wherein the water-soluble binder comprises at least one selected from the group consisting of polyacrylic acid (PAA), polyethylene maleic anhydride (PEMA), cellulose ((C₅H₁₀O₅)ₙ), carboxymethyl cellulose (CMC), hydroxypropyl cellulose (HPC), polyvinylidene fluoride-hexafluoropropylene (PVdF-HFP), and polyethylene oxide (PEO).
Aspect 4. The composition for coating an anode current collector according to any one of aspects 1 to 3, wherein the silver salt and the water-soluble binder are present in a weight ratio of 2:8 to 8:2.
Aspect 5. The composition for coating an anode current collector according to any one of aspects 1 to 4, further comprising a solvent,
   wherein the solvent is water.
Aspect 6. The composition for coating an anode current collector according to aspect 5, wherein an acidity (pH) is 5.5 or less.
Aspect 7. A method of manufacturing an anode current collector for a lithium secondary battery, the method comprising:
   preparing a coating composition by adding a silver salt and a water-soluble binder to a solvent;
   applying the coating composition onto an anode current collector; and
   drying the applied coating composition.
Aspect 8. The method according to aspect 7, further comprising heating the coating composition before applying the coating composition onto the anode current collector.
Aspect 9. The method according to aspect 8, wherein a temperature of the coating composition is maintained at 40 °C to 60 °C.
Aspect 10. The method according to any one of aspects 7 to 9, wherein the drying step is performed at 80 °C to 100 °C.
Aspect 11. The method according to any one of claims 7 to 10, wherein the drying step is a vacuum drying step.
Aspect 12. An anode current collector for a lithium secondary battery, comprising:
   a metal layer comprising a metal having an ionization tendency higher than that of silver (Ag); and
   a coating layer comprising silver particles formed by reduction of metal elements on a surface of the metal layer, a water-soluble binder, and a coordination compound of silver cations and the water-soluble binder.
13. A lithium secondary battery comprising:
   a cathode; and
   the anode current collector of aspect 12 disposed opposite the cathode.
Aspect 14. The lithium secondary battery according to aspect 13, further comprising a solid electrolyte layer interposed between the cathode and the anode current collector.
Aspect 15. The lithium secondary battery according to aspect 14, wherein the lithium secondary battery is an anode-free secondary battery.

### Manufacturing Examples

### Example 1

### 1) Preparation of Coating Composition

A composition for coating an anode current collector was prepared by adding 0.4 wt% silver nitrate (AgNO₃) and 0.6 wt% polyethylene maleic anhydride (PEMA) to 99 wt% water, followed by heating (temperature: 50 °C).

### 2) Preparation of Anode Current Collector

The coating composition was applied onto a copper current collector. After application, the coated copper current collector was dried in a vacuum dryer (temperature: 90 °C) for 6 hours to prepare an anode current collector.

### 3) Manufacture of Secondary Battery

A cathode layer was formed by pressing 0.03 g of a cathode material mixture (LiNi_{0.90}Co_{0.05}Mn_{0.05}O₂: Li₆PS₅Cl: Super-C65 = 70:27:3 by weight) at a pressure of 300 MPa onto one surface of a solid electrolyte sheet prepared by pressing 0.13 g of Li₆PS₅Cl at 100 MPa. The anode current collector prepared as described above was disposed on the other surface of the solid electrolyte sheet and further pressed at 50 MPa to manufacture a secondary battery.

### Example 2

An anode current collector and a secondary battery were manufactured in the same manner as in Example 1, except that the coating composition was prepared using 0.6 wt% polyacrylic acid (PAA) instead of 0.6 wt% polyethylene maleic anhydride (PEMA).

### Example 3

An anode current collector and a secondary battery were manufactured in the same manner as in Example 1, except that the coating composition was prepared using 0.6 wt% cellulose instead of 0.6 wt% polyethylene maleic anhydride (PEMA).

### Example 4

An anode current collector and a secondary battery were manufactured in the same manner as in Example 1, except that the coating composition was prepared using 0.6 wt% hydroxypropyl cellulose (HPC) instead of 0.6 wt% polyethylene maleic anhydride (PEMA).

### Example 5

An anode current collector and a secondary battery were manufactured in the same manner as in Example 1, except that the coating composition was prepared using 0.6 wt% silver nitrate (AgNO₃) and 0.4 wt% polyethylene maleic anhydride (PEMA).

### Comparative Example 1

An anode current collector and a secondary battery were manufactured in the same manner as in Example 1, except that 1.0 wt% silver nitrate (AgNO₃) was used instead of 0.4 wt% silver nitrate (AgNO₃), and the coating composition did not include polyethylene maleic anhydride (PEMA).

### Comparative Example 2

A secondary battery was manufactured in the same manner as in Example 1, except that a copper collector not coated with the coating composition was used as an anode current collector.

### Experimental Example 1: Measurement of Acidity (pH) of Composition for Coating Anode Current Collector

The acidity of the compositions for coating anode current collectors of Examples 1 to 5 and Comparative Example 1 was measured using a pH 3310 (Xylem).

The measurement results are shown in Table 1.

**[TABLE 1]**

| | Acidity (pH) |
|---|---|
| Example 1 | 2.43 |
| Example 2 | 2.57 |
| Example 3 | 4.93 |
| Example 4 | 5.11 |
| Example 5 | 2.52 |
| Comparative Example 1 | 6.88 |

The coating compositions of Examples 1, 2, and 5 were relatively highly acidic, whereas the coating compositions of Examples 3, 4, and Comparative Example 1 were relatively weakly acidic or close to neutral.

### Experimental Example 2: Surface Analysis

### 1. Surface Elasticity Analysis

The elasticity of surfaces of anode current collectors of the secondary batteries of Examples 1 and 2 and Comparative Example 1 was measured using a nanoindenter (STeP500 NHT3, Anton Paar).

After gradually increasing a load applied by a nano tip to the surface of the anode current collectors of Examples 1 and 2 and Comparative Example 1 up to 10 mN, an indentation depth as a function of the load was measured when the nano tip was removed.

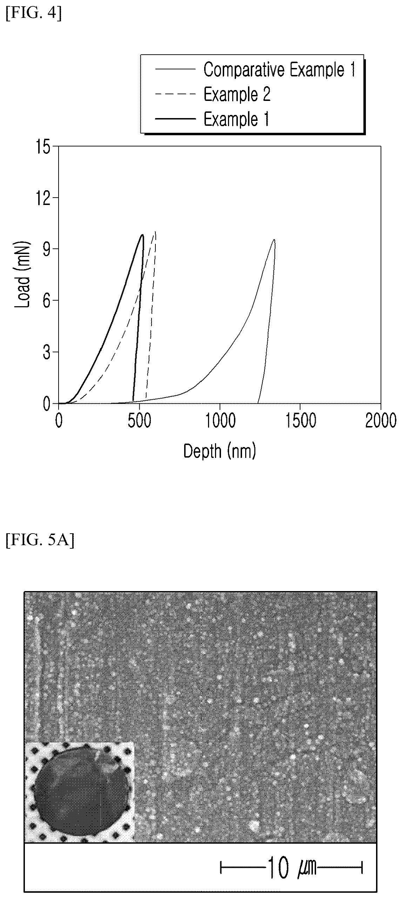

FIG. 4 is a graph illustrating indentation depth versus load obtained by nanoindenter analysis of surfaces of anode current collectors of Examples 1 and 2 and Comparative Example 1.

The elastic recovery ratios calculated from the measurement results are shown in Table 2.

**[TABLE 2]**

| | Maximum depth (nm) | Depth at zero load (nm) | Elastic recovery ratio (%) |
|---|---|---|---|
| Example 1 | 526.0 | 460.7 | 12.4 |
| Example 2 | 600.2 | 543.2 | 9.5 |
| Comparative Example 1 | 1342.5 | 1253.9 | 6.6 |

The elastic recovery ratio may be calculated using Equation 1 below. [Equation 1] $Elastic recovery ratio = \left(Maximum depth-Depth at zero load\right) / Maximum depth$

In Equation 1, the maximum depth is a depth to which a nanoindenter tip penetrates into the anode when a load applied to the anode through the nanoindenter tip reaches 10 mN, and the depth at zero load is a depth to which the nanoindenter tip remains penetrated when the load applied to the nanoindenter tip is reduced from 10 mN to zero.

Referring to FIG. 4 and Table 2, the elastic recovery ratios of the anode current collectors of Examples 1 and 2 were greater than that of the anode current collector of Comparative Example 1.

### 2. Surface Morphology

### (1) SEM and EDX Images

The surface morphologies of anode current collectors of the secondary batteries of Examples 1 to 5 and Comparative Examples 1 and 2 were analyzed using a scanning electron microscope (SEM).

A VERIOS (FEI) scanning electron microscope was used.

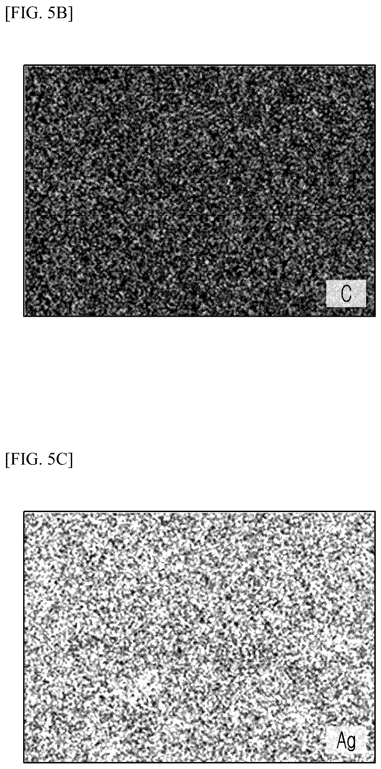

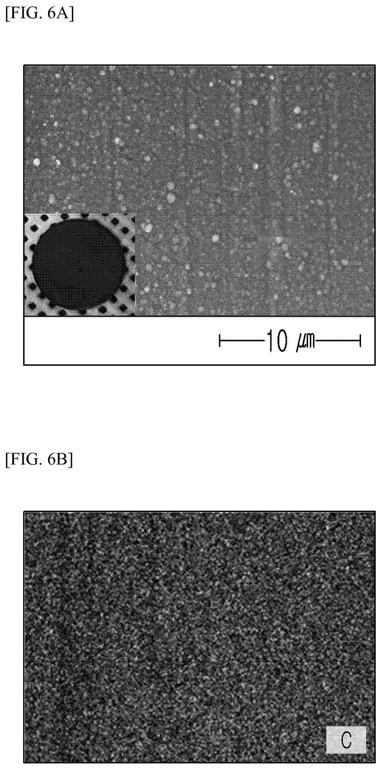

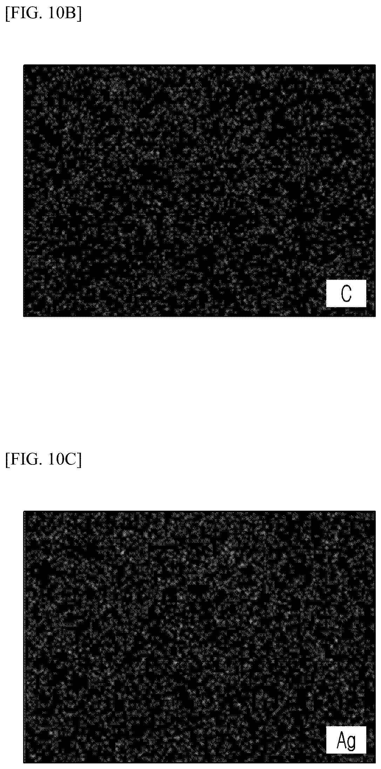

FIGS. 5A to 10C are SEM and EDX images of surfaces of the anode current collectors of Examples 1 to 4 and Comparative Examples 1 and 2, respectively.

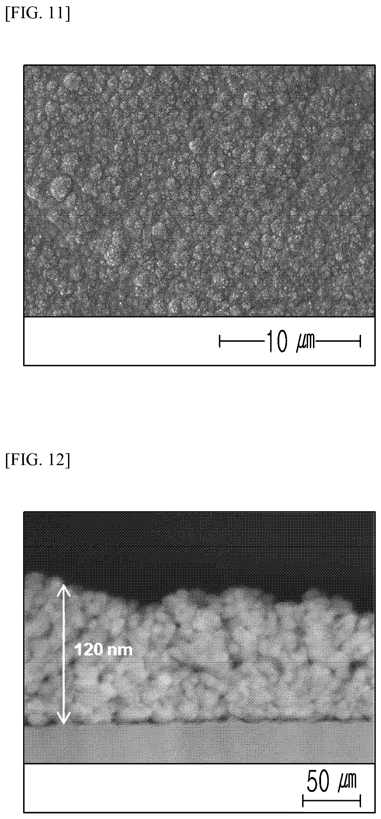

FIG. 11 is an SEM image of a surface of the anode current collector of Example 5.

Referring to FIGS. 5A to 6C and FIG. 11, it can be confirmed that a silver element (Ag) based on a silver salt and carbon and oxygen elements based on a water-soluble binder are uniformly formed on the surfaces of the anode current collectors of Examples 1, 2, and 5.

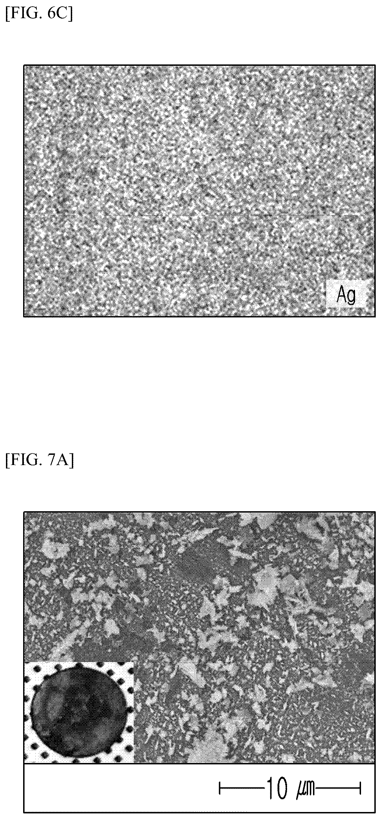

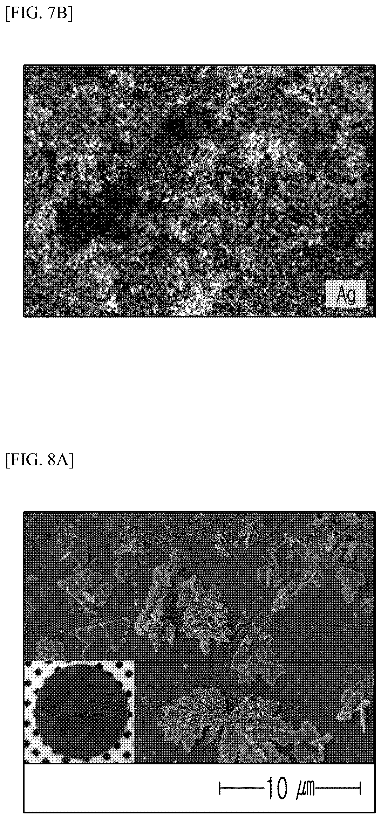

Referring to FIGS. 7A to 8B, it can be confirmed that a silver element is non-uniformly formed on the surfaces of the anode current collectors of Examples 3 and 4.

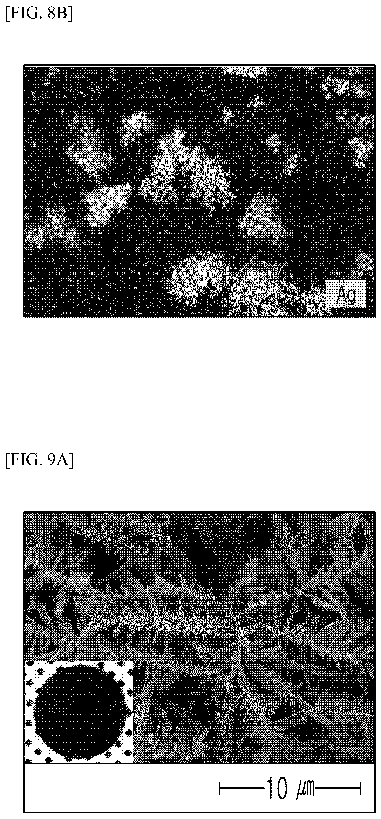

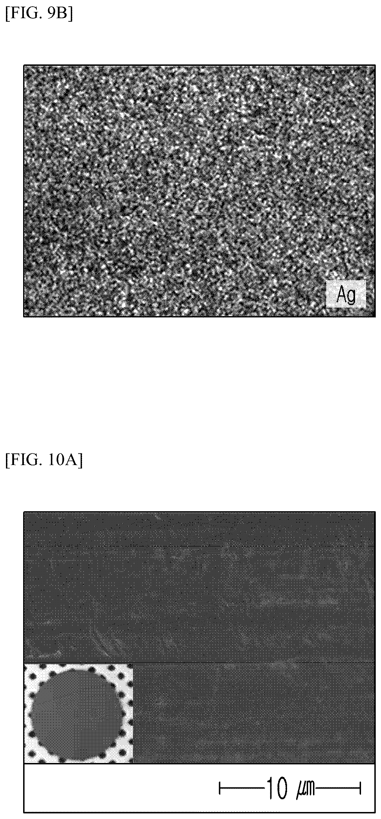

Referring to FIG. 9A to 9B, it can be confirmed that dendrites are formed on the anode current collector of Comparative Example 1 due to an ionization reaction of a silver element based on a silver salt.

### (2) TEM Image

The surface morphology of the anode current collector of the secondary battery of Example 1 was analyzed using a transmission electron microscope (TEM).

A JEM 2100F (JEOL) transmission electron microscope was used.

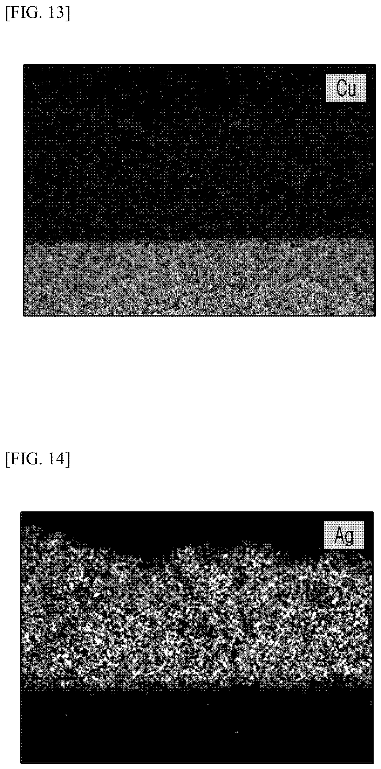

FIGS. 12 to 17 are TEM, SEM, and EDS images of the anode current collector of Example 1.

Referring to FIGS. 12 to 14, a coating layer is uniformly formed on a surface of the copper current collector of Example 1.

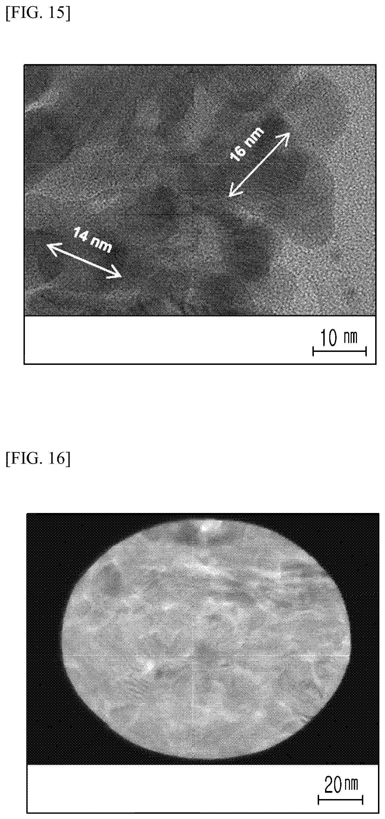

Referring to FIG. 16, it can be confirmed that lithium dendrites are not formed on the anode current collector.

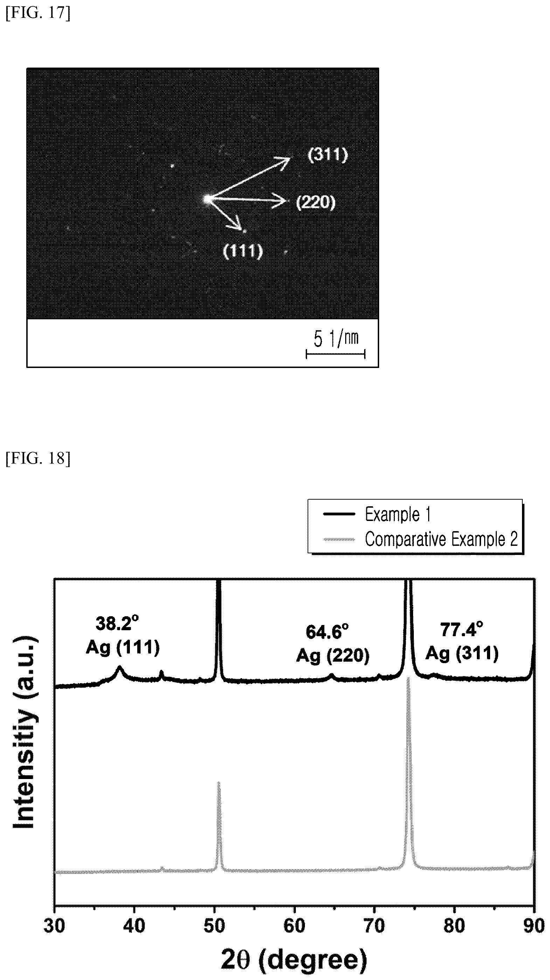

Referring to FIG. 17, it can be confirmed that silver particles in the coating layer have (111), (220), and (311) crystal structures.

### Experimental Example 3: XRD and XPS Analysis

X-ray diffraction (XRD) analysis was performed on the anode current collectors of Examples 1 and 2 and Comparative Examples 1 and 2 using a D8 ADVANCE (Bruker).

X-ray photoelectron spectroscopy (XPS) analysis was performed on the anode current collectors of Examples 1 and 2 and Comparative Example 2 using a K-Alpha+ (Thermo Fisher Scientific).

FIG. 18 is an XRD graph analyzing crystal structure components of the anode current collectors of Example 1 and Comparative Example 2.

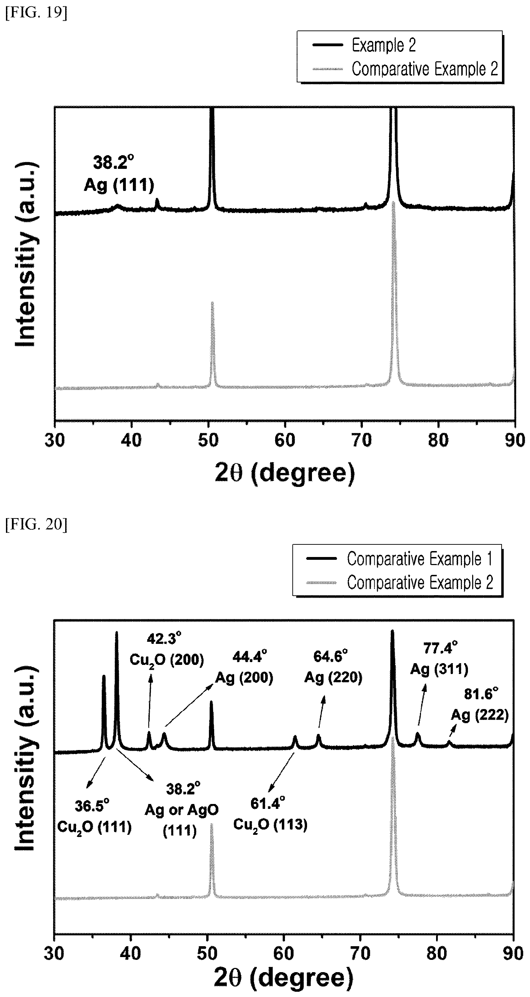

FIG. 19 is an XRD graph analyzing crystal structure components of the anode current collectors of Example 2 and Comparative Example 2.

FIG. 20 is an XRD graph analyzing crystal structure components of the anode current collectors of Comparative Examples 1 and 2.

Referring to FIGS. 18 to 20, the anode current collector of Example 1 exhibited Ag(111), Ag(220), and Ag(311) crystal structures (20 = 38.2°, 64.6°, and 77.4°, respectively), while the anode current collector of Example 2 exhibited an Ag(111) crystal structure (20 = 38.2°).

In the anode current collector of Comparative Example 1, Cu₂O(111), Cu₂O(200), and Cu₂O(113) crystal structures were additionally observed (2θ = 36.5°, 42.3°, and 61.4°, respectively).

A Cu peak (20 = 51°) was observed in the anode current collectors of Examples 1 and 2 and Comparative Examples 1 and 2.

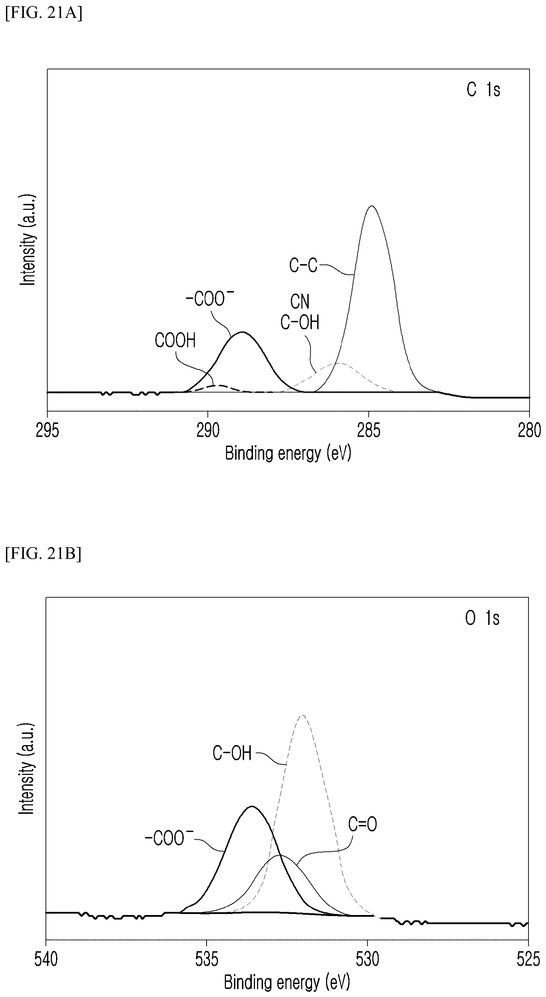

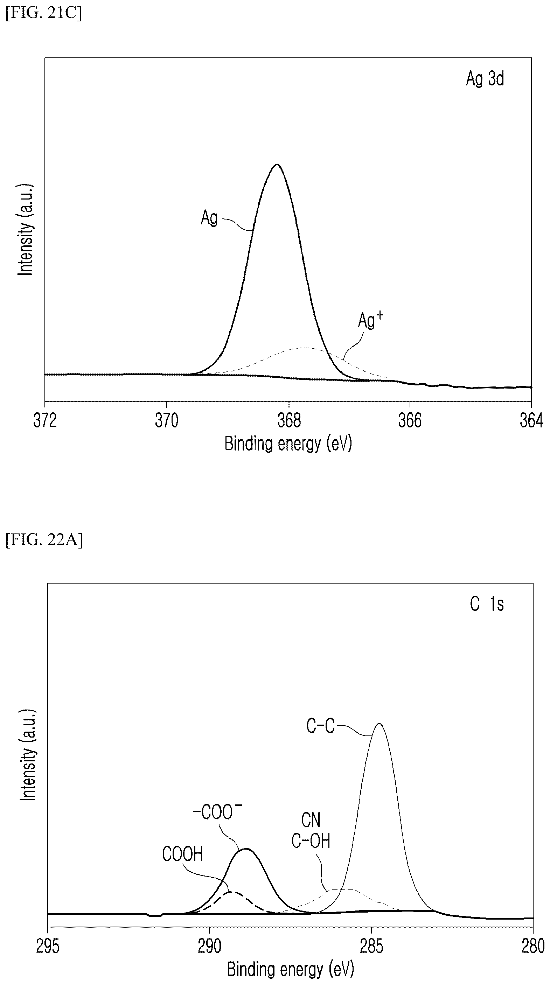

FIGS. 21 to 23 are XPS graphs analyzing crystal structure components of the anode current collectors of Examples 1 and 2 and Comparative Example 2, respectively.

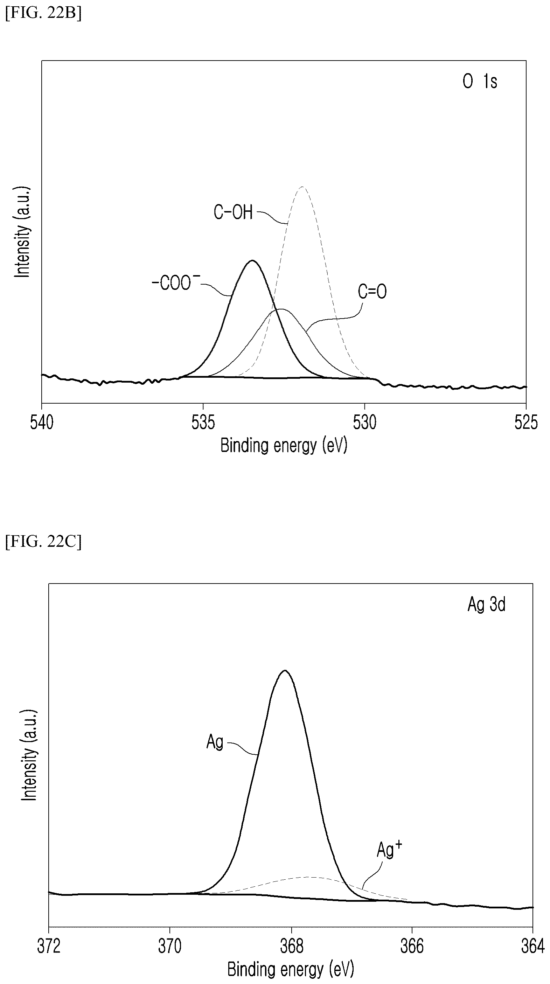

Referring to FIGS. 21 and 22, it was confirmed that the anode current collectors of Examples 1 and 2 included silver cations (Ag⁺), carboxylate anions (COO⁻), and silver particles.

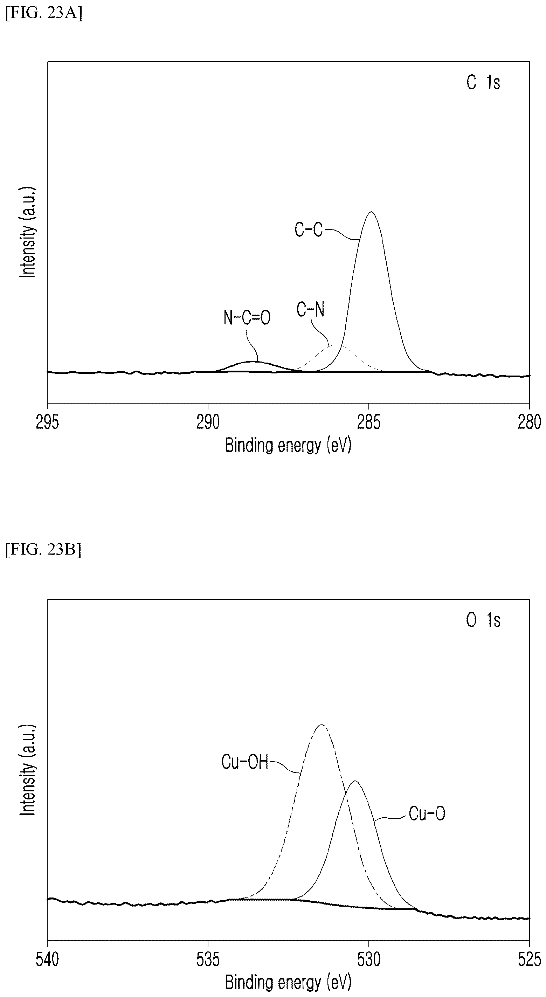

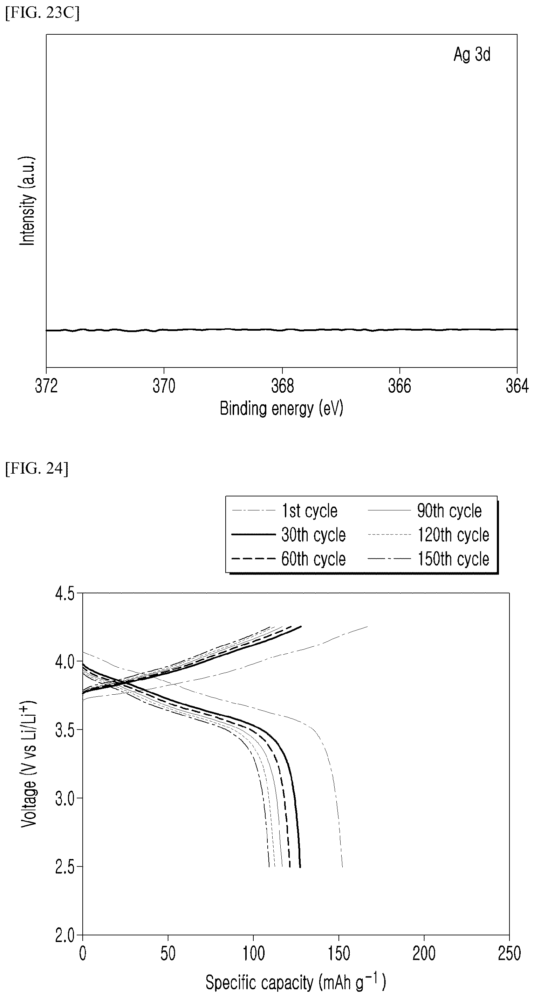

Referring to FIG. 23, it was confirmed that the anode current collector of Comparative Example 2 included copper oxide and did not include silver-based materials such as silver particles.

### Experimental Example 4: Charge and Discharge Evaluation

### 1. Rate Schedule

The secondary batteries of Examples 1 and 2 and Comparative Example 2 were initially charged and discharged at 0.1C (CC/CV charging and CC discharging) based on an areal capacity of 4 mAh/cm². Subsequently, 150 cycles of charging and discharging were performed at 0.33 C (CC mode) at 30 °C, where each charge/discharge sequence was defined as one cycle (cut-off voltage: 2.5 V - 4.25 V).

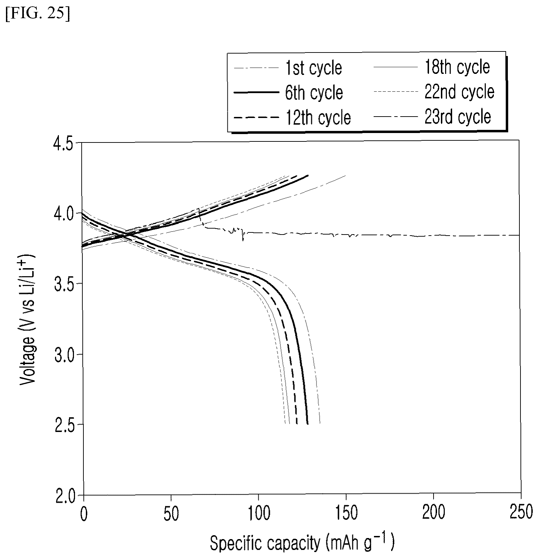

FIGS. 24 to 26 are charge and discharge graphs of the secondary batteries of Examples 1 and 2 and Comparative Example 2, respectively.

Referring to FIGS. 24 to 26, the secondary battery of Example 1 operated stably without short-circuiting up to 150 cycles, whereas the secondary battery of Example 2 experienced a short-circuit at the 23rd cycle. The secondary battery of Comparative Example 2 experienced a short-circuit during initial charging.

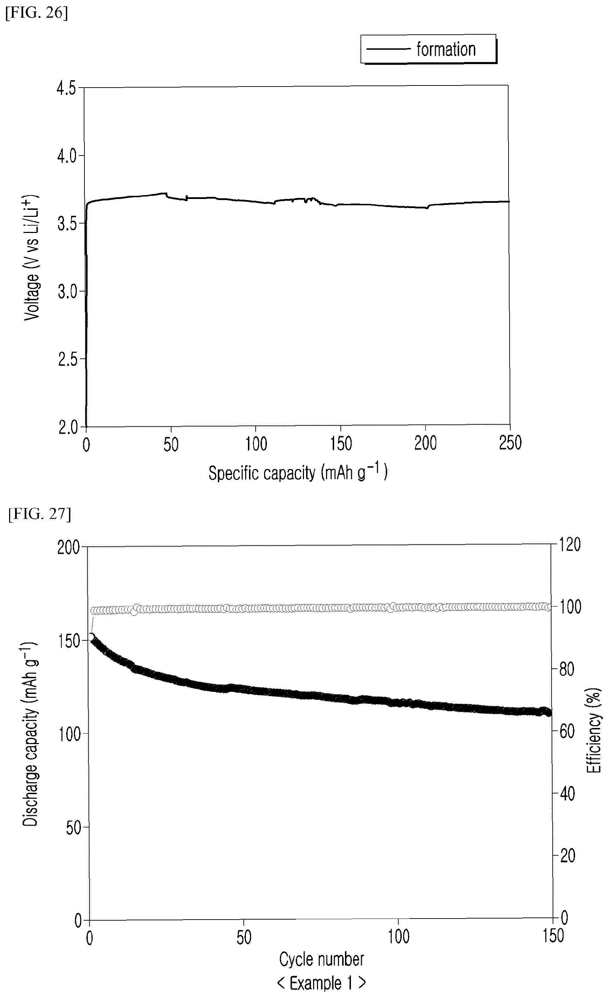

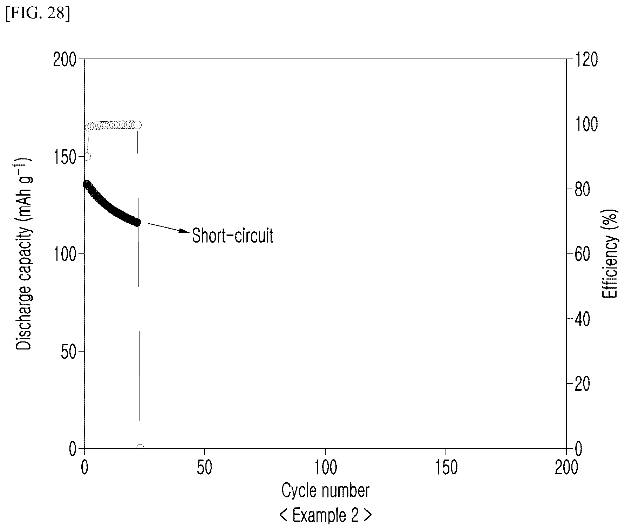

FIGS. 27 and 28 are cycle life characteristic graphs of the secondary batteries of Examples 1 and 2, respectively.

Table 3 below shows an initial discharge capacity and charge and discharge efficiencies at the 22nd cycle and the 150th cycle of the secondary batteries of Examples 1 and 2.

**[TABLE 3]**

| | 1st cycle | 22nd cycle | | 150th cycle | |
|---|---|---|---|---|---|
| | Discharge capacity (mAh/g) | Discharge capacity (mAh/g) | Charge-discharge efficiency (%) | Discharge capacity (mAh/g) | Charge-discharge efficiency (%) |
| Example 1 | 152.2 | 131.04 | 99.8 | 109.28 | 99.8 |
| Example 2 | 135.4 | 115.50 | 99.5 | - | - |

Referring to Table 3 and FIGS. 27 and 28, the secondary battery of Example 1 exhibited a higher initial discharge capacity and higher charge-discharge efficiency than the secondary battery of Example 2.

### 2. Rate Change

The secondary battery of Example 1 was initially charged and discharged at 0.1C (CC/CV charging and CC discharging) based on an areal capacity of 4 mAh/cm². Subsequently, after being charged at 0.1C (CC mode) at 30 °C, discharges were performed at rates of 0.1C, 0.2C, 0.33C, 0.5C, 1C, and 2C, respectively (cut-off voltage: 2.5 V - 4.25 V).

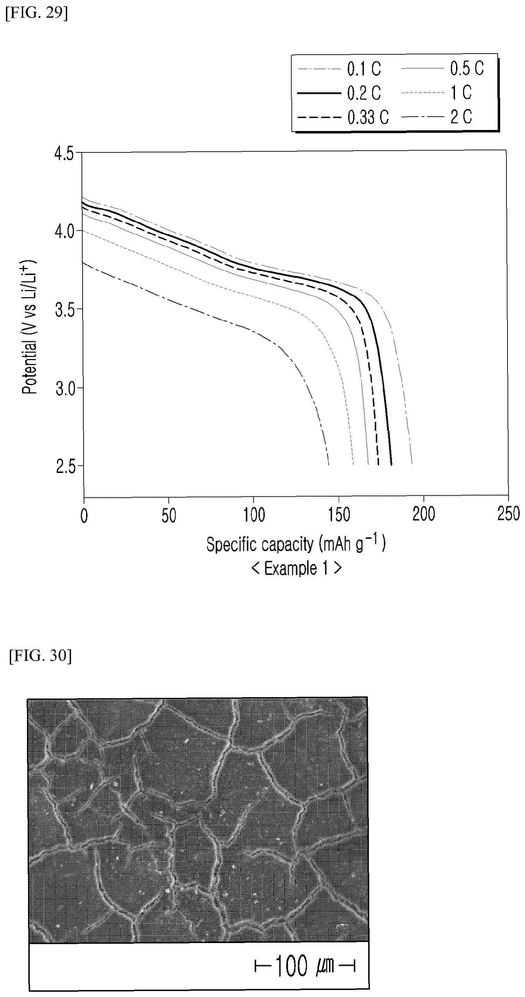

FIG. 29 is a discharge graph according to a rate change of the secondary battery of Example 1.

### 3. Lithium Electrodeposition Evaluation

### (1) Formation Charging

The secondary batteries of Example 1 were charged at a current density of 0.3 mA/cm² (CC mode) at 30 °C for 1 hour, 3 hours, and 10 hours, respectively (cut-off voltage: 4.25 V). Subsequently, the surface morphologies of each secondary battery were analyzed using a scanning electron microscope (SEM).

A VERIOS (FEI) scanning electron microscope was used.

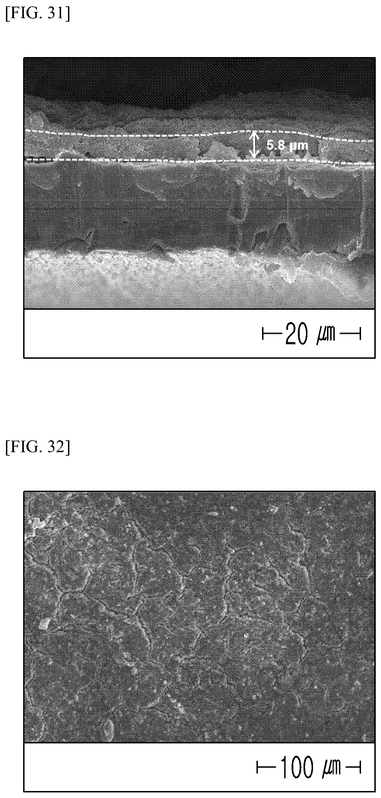

FIGS. 30 and 31 are SEM images of the secondary battery of Example 1 taken after charging at a current density of 0.3 mA/cm² for 1 hour.

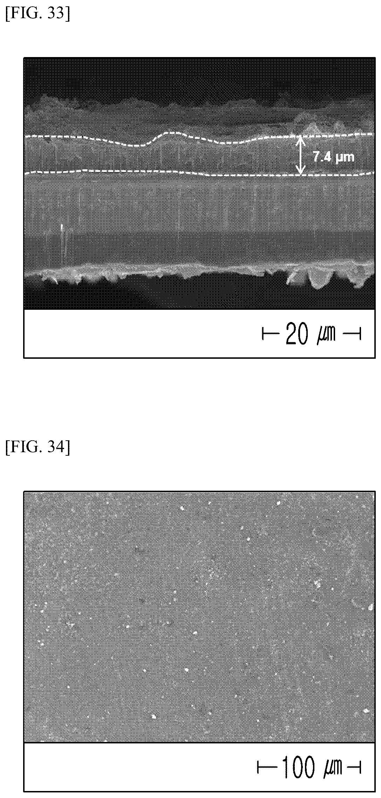

FIGS. 32 and 33 are SEM images of the secondary battery of Example 1 taken after charging at a current density of 0.3 mA/cm² for 3 hours.

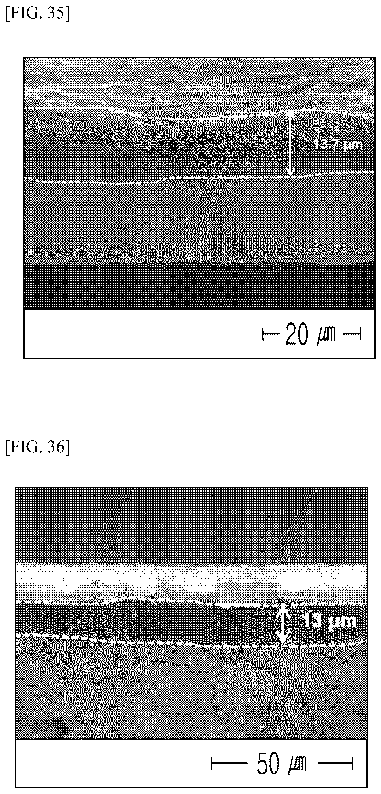

FIGS. 34 and 35 are SEM images of the secondary battery of Example 1 taken after charging at a current density of 0.3 mA/cm² for 10 hours.

### (2) Evaluation of Lithium Electrodeposition after Charge and Discharge

The secondary battery of Example 1 was initially charged and discharged for one cycle at 0.1 C (CC/CV charging and CC discharging) at 30 °C. Subsequently, the battery was charged and discharged at 0.33 C (CC mode) (cut-off voltage: 2.5 V - 4.25 V).

Surface morphologies of the secondary battery of Example 1 after initial charging, after initial discharging, after charging at 0.33C, and after discharging at 0.33C were analyzed using a scanning electron microscope (SEM).

A VERIOS (FEI) scanning electron microscope was used.

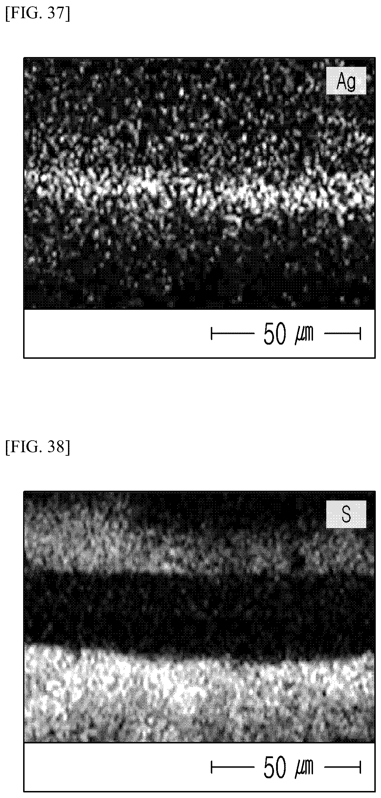

FIGS. 36 to 38 are SEM and EDS images taken after initial charging of the secondary battery of Example 1.

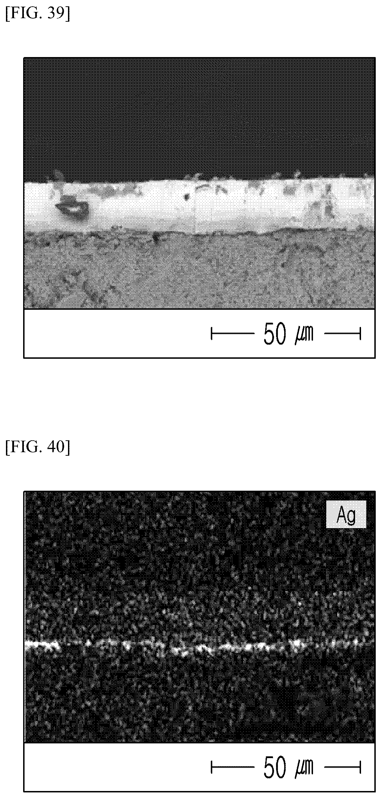

FIGS. 39 to 41 are SEM and EDS images taken after initial discharging of the secondary battery of Example 1.

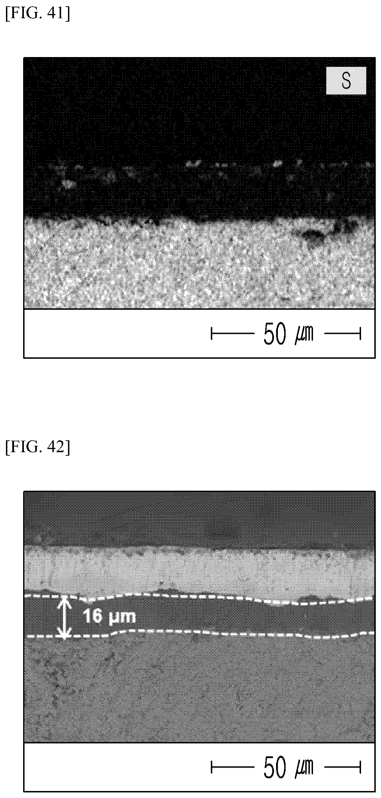

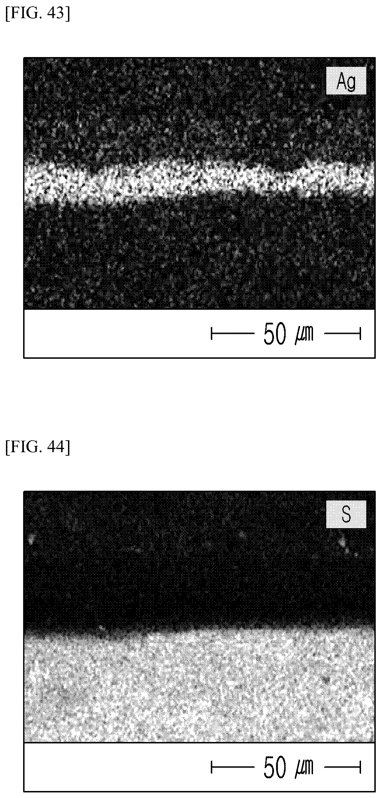

FIGS. 42 to 44 are SEM and EDS images taken after charging the secondary battery of Example 1 under a 0.33C condition.

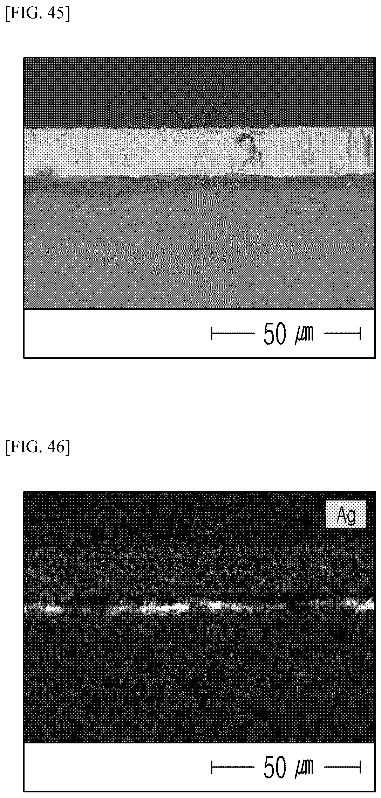

FIGS. 45 to 47 are SEM and EDS images taken after discharging the secondary battery of Example 1 under a 0.33C condition.

Referring to FIGS. 30 to 47, it can be confirmed that lithium deposition occurred uniformly during charging and discharging of the secondary battery of Example 1.

### Experimental Example 5: Side Reaction Test

### 1. Linear Sweep Voltammetry (LSV) Test

Symmetric cells were manufactured using the anode current collectors prepared and/or used in Example 1 and Comparative Example 2 as both a cathode and an anode, and the solid electrolyte of Example 1 as a solid electrolyte, according to the same method as in Example 1.

LSV tests were performed on each manufactured symmetric cell.

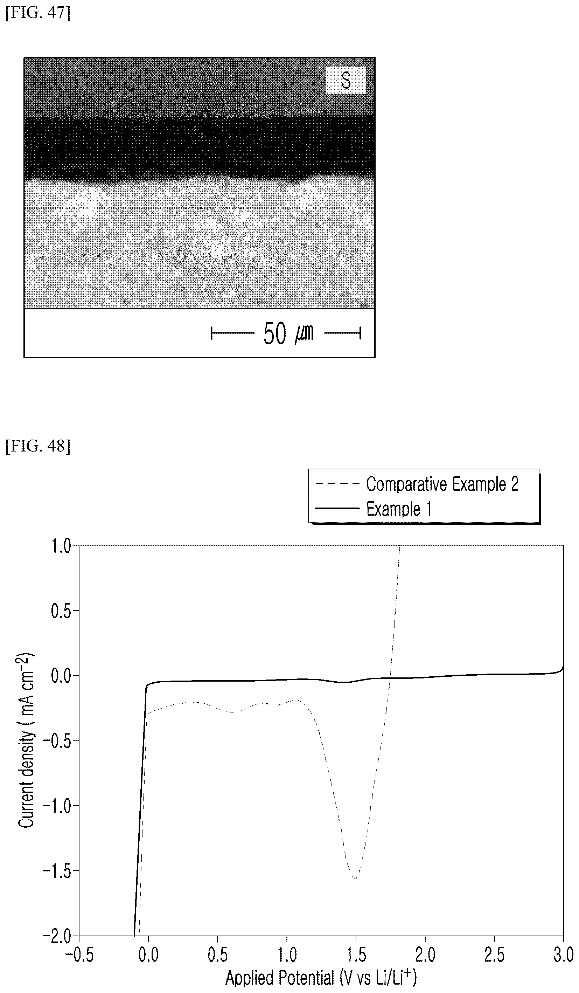

FIG. 48 is a graph illustrating results of LSV testing on the symmetric cells of Example 1 and Comparative Example 2.

Referring to FIG. 48, the symmetric cell using the anode current collector of Example 1 exhibited a substantially constant current density, whereas the symmetric cell using the copper electrode of Comparative Example 2 exhibited a peak around 1.5 V due to a side reaction with the electrolyte.

### 2. Evaluation of Stability

### (1) Measurement of Impedance Increase Rate

Symmetric cells were manufactured using the anode current collectors prepared and/or used in Examples 1 and 2 and Comparative Example 2 as both a cathode and an anode, and using the solid electrolyte of Example 1, according to the same method as in Example 1.

An electrolyte resistance (Ω) and an interfacial resistance (Ω) of each manufactured symmetric cell were measured 1 day, 2 days, and 3 days after manufacture. The results are shown in Table 4.

Resistance increase rates (%) for the electrolyte resistance and the interfacial resistance were calculated as follows: 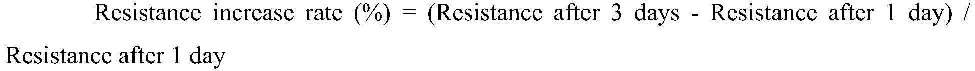 Resistance increase rate (%) = (Resistance after 3 days - Resistance after 1 day) / Resistance after 1 day

**[TABLE 4]**

| | | After 1 day | After 2 days | After 3 days | Resistance increase rate (%) |
|---|---|---|---|---|---|
| Example 1 | Electrolyte resistance (Ω) | 53.5 | 54.3 | 54.8 | 1.5 |
| | Interfacial resistance (Ω) | 43.0 | 43.2 | 44.5 | 3.5 |
| Example 2 | Electrolyte resistance (Ω) | 55.1 | 56.4 | 57.0 | 3.4 |
| | Interfacial resistance (Ω) | 42.3 | 43.7 | 44.5 | 5.2 |
| Comparative Example 2 | Electrolyte resistance (Ω) | 54.3 | 56.7 | 60.1 | 10.7 |
| | Interfacial resistance (Ω) | 82.6 | 93.1 | 94.8 | 14.8 |

The resistance increase rates of electrolyte resistance and/or interfacial resistance of the symmetric cells of Examples 1 and 2 were lower than those of the symmetric cell of Comparative Example 2, which did not have a coating layer formed thereon.

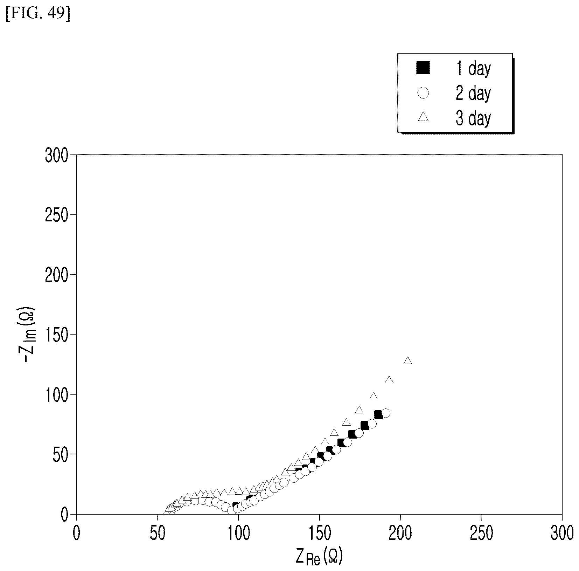

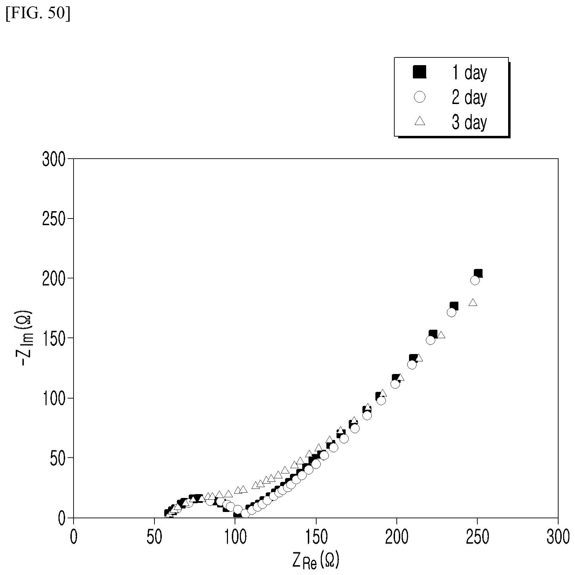

FIGS. 49 to 51 are graphs illustrating impedance changes over time for the symmetric cells of Examples 1 and 2 and Comparative Example 2, respectively.

Referring to FIGS. 49 to 51, the resistance increase rate of the symmetric cell of Comparative Example 2 was higher than that of the symmetric cells of Examples 1 and 2 due to side reactions with the electrolyte.

### (2) SEM Image

The surface morphology of each anode current collector was analyzed using a scanning electron microscope (SEM) three days after manufacture of the symmetric cells fabricated using the anode current collectors of Example 1 and Comparative Example 2, which were used in the impedance increase rate measurement of 1) above.

A VERIOS (FEI) scanning electron microscope was used.

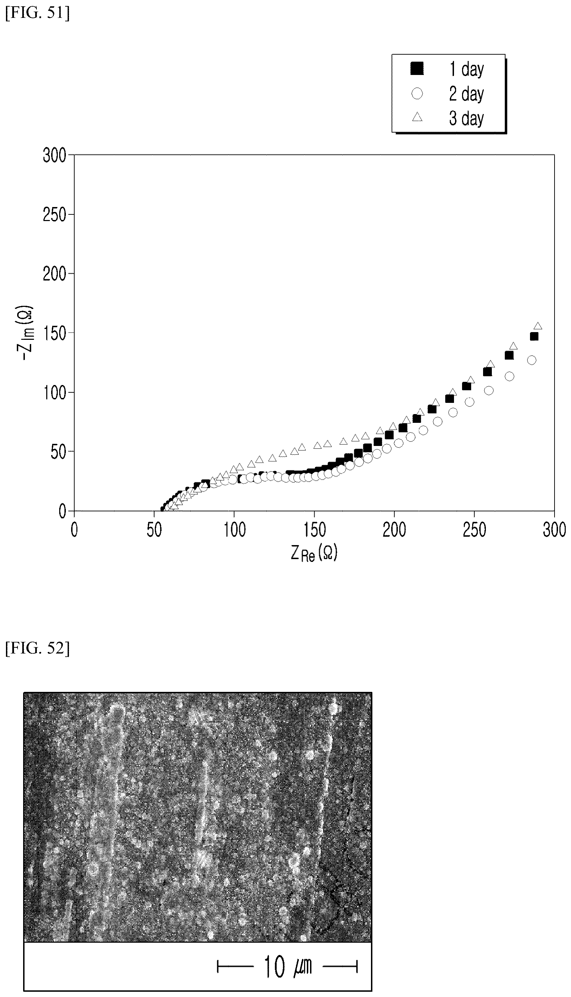

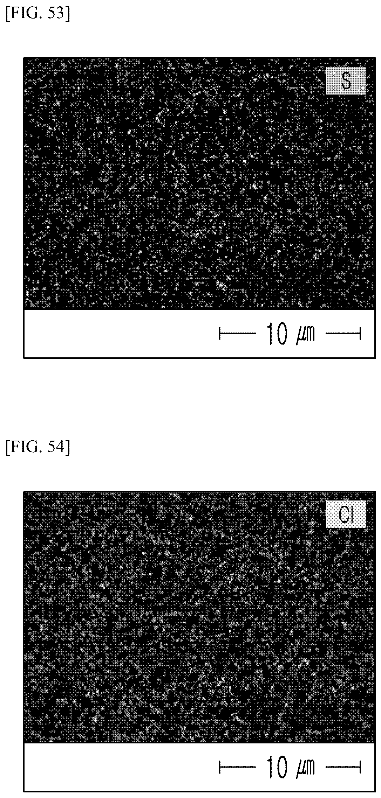

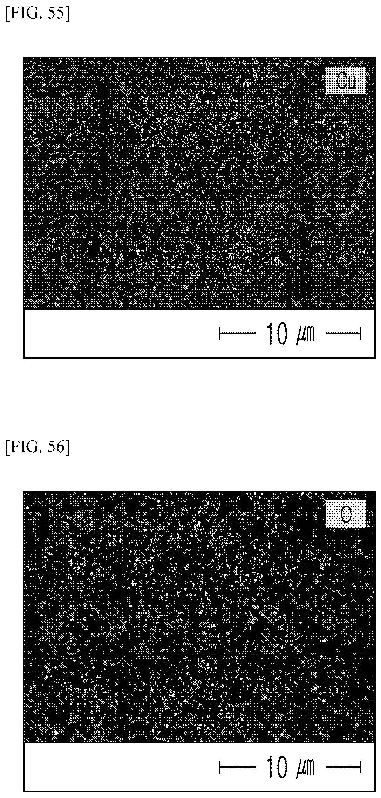

FIGS. 52 to 56 are SEM and EDS images of a surface of the anode current collector of the symmetric cell of Example 1 after 3 days.

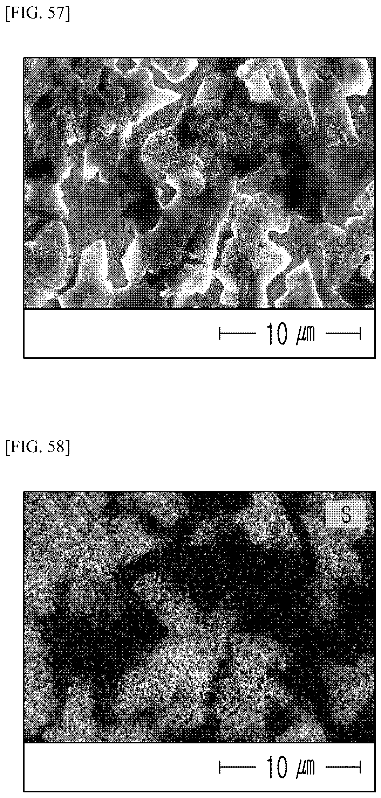

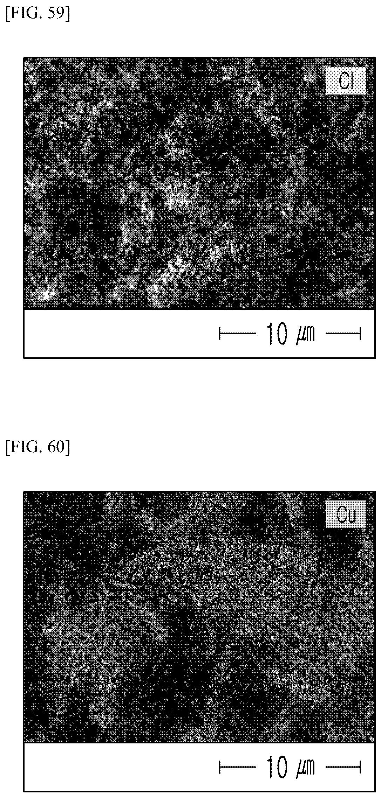

FIGS. 57 to 61 are SEM and EDS images of a surface of the anode current collector of the symmetric cell of Comparative Example 2 after 3 days.

Referring to FIGS. 57 to 61, a side reaction with the electrolyte occurred on the surface of the copper current collector of Comparative Example 2 three days after manufacture.

### Experimental Example 6: Evaluation of Lithium-Copper Cell

### 1. Charge and Discharge Evaluation

Lithium-copper cells were manufactured using the anode current collectors prepared and/or used in Examples 1 and 2 and Comparative Example 2 as anodes, using a lithium plate (Li plate) as a cathode, and using the solid electrolyte of Example 1, according to the same method as in Example 1.

The lithium-copper cells manufactured according to Examples 1 and 2 and Comparative Example 2 were initially charged at 30 °C at a current density of 0.25 mA/cm² with a deposition capacity of 0.25 mAh/cm². Subsequently, 100 cycles of charging and discharging were performed at a current density of 0.5 mA/cm² with a deposition capacity of 0.5 mAh/cm², where each charge/discharge sequence was defined as one cycle (cut-off voltage: 2.5 V - 4.25 V).

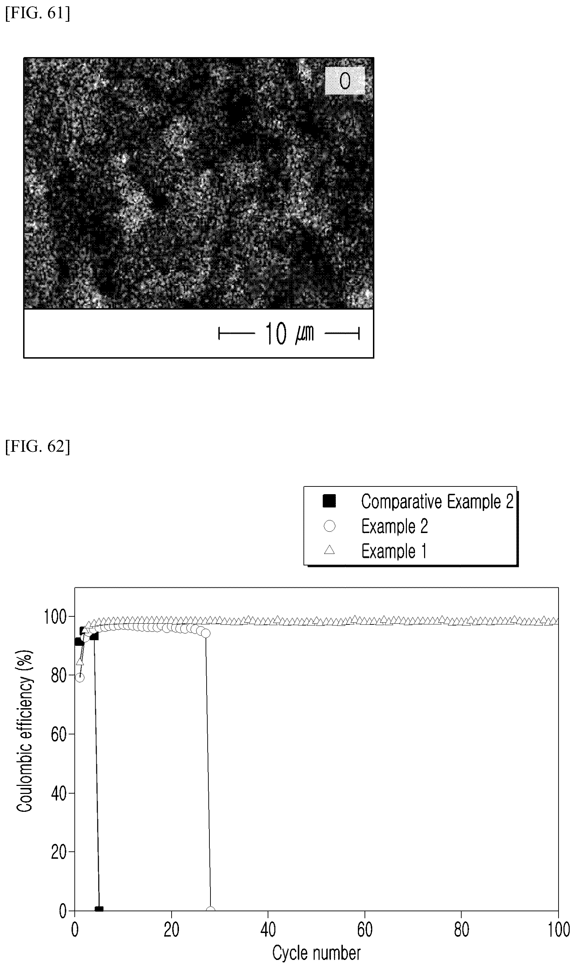

FIG. 62 is a graph illustrating Coulombic efficiency versus cycle number for the lithium-copper cells of Examples 1 and 2 and Comparative Example 2.

Referring to FIG. 62, the lithium-copper cell of Example 1 operated stably without a short-circuit up to 100 cycles, whereas the lithium-copper cell of Example 2 experienced a short-circuit at the 29th cycle, and the lithium-copper cell of Comparative Example 2 experienced a short-circuit at the 4th cycle.

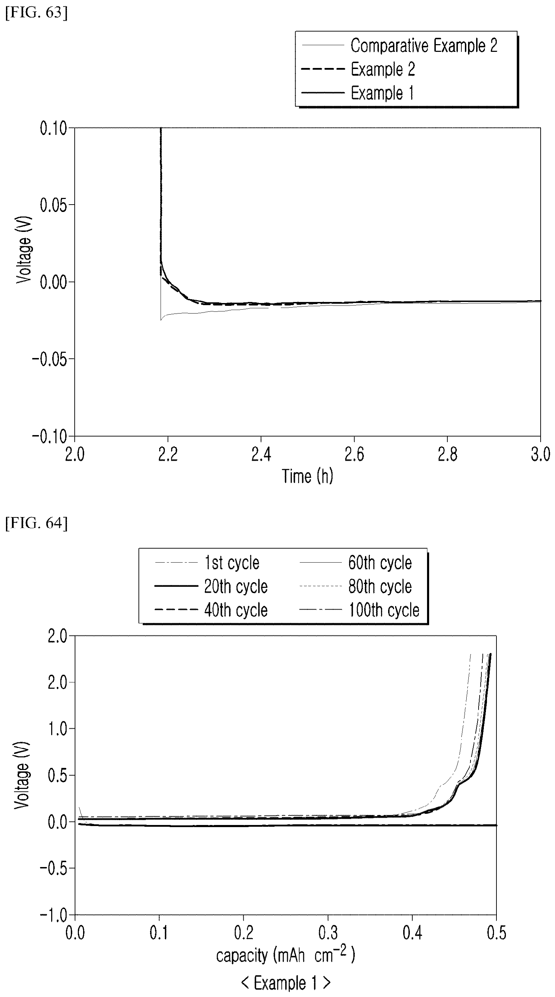

FIG. 63 is a voltage versus time graph illustrating lithium deposition during a first cycle after initial charging for the lithium-copper cells of Examples 1 and 2 and Comparative Example 2.

Referring to FIG. 63, it was confirmed that silver and lithium formed an alloy in the lithium-copper cells of Examples 1 and 2.

FIGS. 64 to 66 are capacity-voltage graphs of anodes of the lithium-copper cells of Examples 1 and 2 and Comparative Example 2, respectively.

Referring to FIG. 64, in the lithium-copper cell of Example 1, dealloying of the anode occurred during lithium stripping, and stable charge and discharge behavior was exhibited up to 100 cycles.

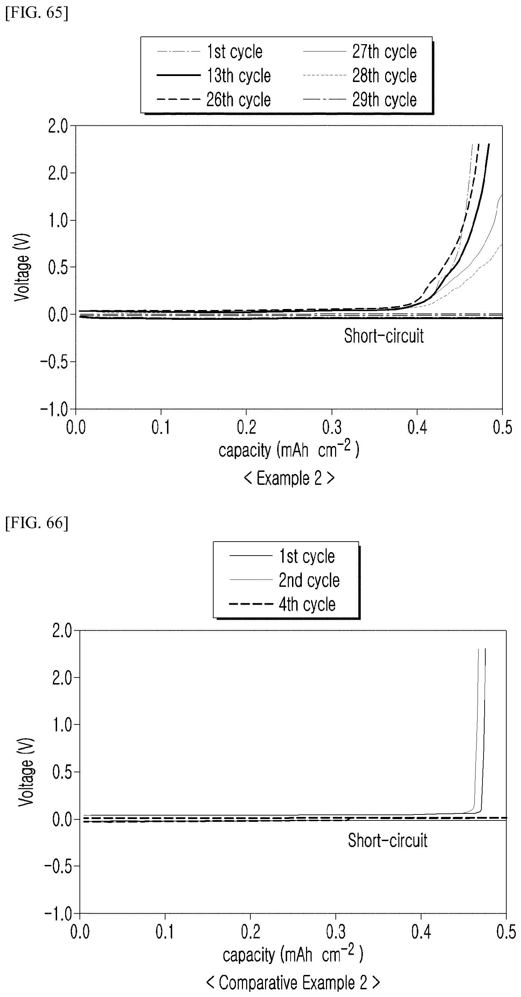

Referring to FIG. 65, in the lithium-copper cell of Example 2, dealloying of the anode occurred during lithium stripping, but a short-circuit occurred at the 29th cycle.

Referring to FIG. 66, in the lithium-copper cell of Comparative Example 2, dealloying of the anode during lithium stripping was not observed, and a short-circuit occurred at the 4th cycle.

### 2. SEM Image

After charge and discharge evaluation of the lithium-copper cells of Example 1 and Comparative Example 2 used in 1) above, surface morphologies of the respective anode current collectors were analyzed using a scanning electron microscope (SEM).

A VERIOS (FEI) scanning electron microscope was used.

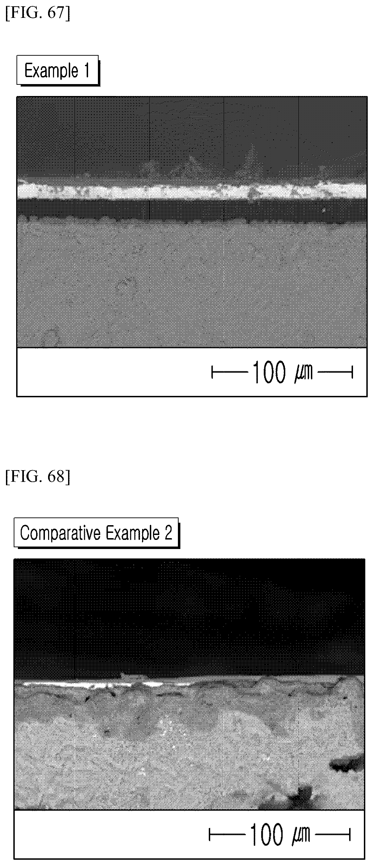

FIG. 67 is an SEM image of an interface of an anode current collector taken after charge and discharge evaluation of the lithium-copper cell of Example 1.

FIG. 68 is an SEM image of an interface of an anode current collector taken after charge and discharge evaluation of the lithium-copper cell of Comparative Example 2.

Referring to FIGS. 67 and 68, lithium was uniformly deposited on a surface of the anode current collector of Example 1, whereas lithium was not uniformly deposited on a surface of the anode current collector of Comparative Example 2.

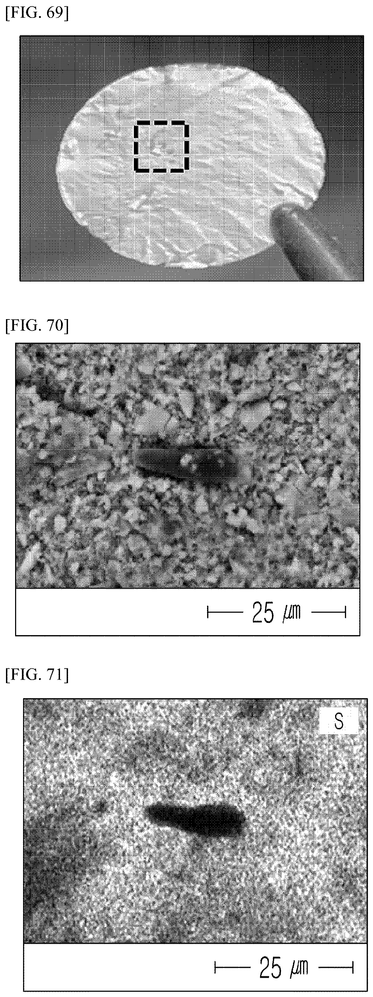

FIG. 69 is an SEM image of an electrolyte surface shown in FIG. 68.

FIGS. 70 and 71 are SEM and EDS images of an enlarged region indicated by a dotted square in FIG. 69.

Referring to FIGS. 69 to 71, lithium dendrites were formed on the surface of the anode current collector due to a short-circuit occurring in the lithium-copper cell of Comparative Example 2.

The contents described above are merely examples of applying the principles of the present disclosure, and other configurations may be further included without departing from the scope of the present disclosure.

### [Description of Reference Numerals]

100: Cathode
110: Cathode current collector
120: Cathode active material layer
130: Solid electrolyte layer
140: Anode current collector
150: Metal layer
160: Coating layer

## Claims

1. A composition for coating an anode current collector comprising:
a silver (Ag) salt; and
a water-soluble binder.

2. The composition for coating an anode current collector according to claim 1, wherein the silver salt comprises at least one selected from the group consisting of silver bis(trifluoromethanesulfonyl) imide (AgTFSI), silver bis(fluorosulfonyl) imide (AgFSI), silver nitrate (AgNO₃), silver difluorooxalatoborate (AgDFOB), silver bisoxalateborate (AgBOB), silver hexafluorophosphate (AgPF₆), silver tetrafluoroborate (AgBF₄), and silver perchlorate (AgClO₄).

3. The composition for coating an anode current collector according to claim 1 or 2, wherein the water-soluble binder comprises at least one selected from the group consisting of polyacrylic acid (PAA), polyethylene maleic anhydride (PEMA), cellulose ((C₅H₁₀O₅)ₙ), carboxymethyl cellulose (CMC), hydroxypropyl cellulose (HPC), and polyethylene oxide (PEO).

4. The composition for coating an anode current collector according to any one of claims 1 to 3, wherein the silver salt and the water-soluble binder are present in a weight ratio of 2:8 to 8:2.

5. The composition for coating an anode current collector according to any one of claims 1 to 4, further comprising a solvent,
wherein the solvent is water.

6. The composition for coating an anode current collector according to claim 5, wherein an acidity (pH) is 5.5 or less.

7. A method of manufacturing an anode current collector for a lithium secondary battery, the method comprising:
preparing a coating composition by adding a silver salt and a water-soluble binder to a solvent;
applying the coating composition onto an anode current collector; and
drying the applied coating composition.

8. The method according to claim 7, further comprising heating the coating composition before applying the coating composition onto the anode current collector.

9. The method according to claim 8, wherein a temperature of the coating composition is maintained at 40 °C to 60 °C.

10. The method according to any one of claims 7 to 9, wherein the drying step is performed at 80 °C to 100 °C.

11. The method according to any one of claims 7 to 10, wherein the drying step is a vacuum drying step.

12. An anode current collector for a lithium secondary battery, comprising:
a metal layer comprising a metal having an ionization tendency higher than that of silver (Ag); and
a coating layer comprising silver particles formed by reduction of metal elements on a surface of the metal layer, a water-soluble binder, and a coordination compound of silver cations and the water-soluble binder.

13. A lithium secondary battery comprising:
a cathode; and
the anode current collector of claim 12 disposed opposite the cathode.

14. The lithium secondary battery according to claim 13, further comprising a solid electrolyte layer interposed between the cathode and the anode current collector.

15. The lithium secondary battery according to claim 14, wherein the lithium secondary battery is an anode-free secondary battery.
